# EUROPÄISCHE PATENTSCHRIFT

(11) **EP 3 581 889 B1**
(45) Veröffentlichungstag und Bekanntmachung des Hinweises auf die Patenterteilung: **11.12.2024**
(21) Anmeldenummer: 19180353.5
(22) Anmeldetag: 14.06.2019
(51) Int. Cl.: G01C 21/34, B60W 40/00, B60W 40/06, G07C 5/08, G08G 1/16, G07C 5/00, G01C 21/36

(54) **COMPUTERIMPLEMENTIERTES VERFAHREN FÜR DIE ERSTELLUNG EINER ROUTE FÜR TRANSPORT UND DURCHFÜHRUNG VON TRANSPORT**
COMPUTER-IMPLEMENTED METHOD FOR GENERATING A ROUTE FOR TRANSPORT AND PERFORMING TRANSPORT
PROCÉDÉ MIS EN OEUVRE PAR UN ORDINATEUR DE CRÉATION D'UN ITINÉRAIRE POUR LE TRANSPORT ET DE MISE EN OEUVRE DU TRANSPORT

(30) Priorität: 14.06.2018 DE 102018114293; 22.03.2019 DE 202019101660 U
(43) Veröffentlichungstag der Anmeldung: 18.12.2019
(73) Patentinhaber: Sommer, Helga, 48477 Hörstel (DE)
(72) Erfinder: Sommer, Helga, 48477 Hörstel (DE)
(74) Vertreter: Liesegang, Eva

(56) Entgegenhaltungen:
- WO-A1-2018/052629
- DE-A1- 102012 011 224
- DE-A1- 102013 222 960
- US-A1- 2014 032 184
- US-A1- 2016 063 710
- US-A1- 2016 290 815
- S. ILGIN GULER ET AL: "Axle Load Power for Pavement Fatigue Cracking : Empirical Estimation and Policy Implications", TRANSPORTATION RESEARCH RECORD., vol. 2225, no. 1, 24 December 2011 (2011-12-24), US, pages 21 - 24, XP055678287, ISSN: 0361-1981, DOI: 10.3141/2225-03

## Beschreibung

### Technischer Hintergrund

Die vorliegende Offenbarung betrifft das technische Gebiet des Transportes. Aspekte der vorliegenden Offenbarung betreffen computerimplementierte Verfahren oder Speichermedien mit Anweisungen zum Ausführen durch einen Prozessor. Ferner betreffen Aspekte der vorliegenden Offenbarung Systeme für den Transport.

Transporte, die nicht den üblichen Maßen und/oder dem üblichen Gewicht des Straßenverkehrs entsprechen, können als Großraumtransporte, Schwertransporte und/oder Ausnahmetransporte bezeichnet werden. Aufgrund der erhöhten Maße, des erhöhten Gewichts oder sonstiger Besonderheiten gelten für solche Transporte oftmals besondere gesetzliche oder behördliche Regelungen.

Ein Transport kann eine präzise wie detaillierte Planung einer Route voraussetzen. Falls beispielsweise eine behördliche Genehmigung für einen bestimmten Transport erforderlich ist, kann die Planung der Route eine wesentliche Rolle für und wider die Erteilung einer Genehmigung spielen. Bei der Planung der Route sind sämtliche Spezifikationen des jeweiligen Transportes zu berücksichtigen. Es gilt, einen sicheren Transport vom Startpunkt bis zum Zielpunkt zu bewerkstelligen. Ferner soll die Sicherheit der anderen Verkehrsteilnehmer gewährleistet werden. Während des Transportes oder durch den Transport dürfen keine Schäden insbesondere an dem Transportfahrzeug, dem Transportgut, der Umgebung oder Dritten entstehen.

Wird eine behördliche Genehmigung für einen bestimmten Transport erteilt, kann diese mit Auflagen verbunden sein. Beispielsweise beinhalten die Auflagen Einschränkungen in der Wegführung, ein besonderes Manöver, zeitliche Bedingungen und/oder sonstige Zusatzbestimmungen für den Transport.

Insbesondere kann es erforderlich sein, dass ein oder mehrere Begleitfahrzeuge den Transport begleiten. Ferner kann es erforderlich sein, dass mindestens eine zusätzliche Person den Fahrzeugführer während des Transports in dem Transportfahrzeug begleitet. Zudem besteht der Wunsch, verlässliche Informationen über die Belastbarkeit der zu durchfahrenen Strecke im Hinblick auf den Transport zu erhalten. Insbesondere ist die Belastbarkeit eines zu überfahrenden Bauwerks wie einer Brücke von besonderem Interesse. Die Information über die Belastbarkeit einer Strecke und/oder von Streckenabschnitten ist außerdem wesentlich für deren Instandhaltung.

Vor diesem Hintergrund wird erwünscht, die Planung und Durchführung eines Transportes zu vereinfachen und/oder zu verbessern.

WO 2018 052629 A1 beschreibt ein System zur Fahrzeugnavigation mit einer Erkennungsschaltung und einer Navigationsschaltung. Die Erkennungsschaltung bestimmt einen Fahrzeugtyp basierend auf empfangenen Fahrzeugdaten. Die Navigationsschaltung ruft eine Navigationsroute zwischen einem Startort und einem Zielort ab und modifiziert diese basierend auf dem bestimmten Fahrzeugtyp. Die Navigationsschaltung zeigt einen Teil der modifizierten Navigationsroute an, der einem aktuellen Standort des Fahrzeugs zugeordnet ist. Der angezeigte Teil der Navigationsroute stellt Geschwindigkeitsbegrenzungsinformationen basierend auf dem bestimmten Fahrzeugtyp bereit. Die Erkennungsschaltung bestimmt die Abmessungen des Fahrzeugs basierend auf den Fahrzeugdaten. Die Navigationsschaltung bestimmt Parkinformationen entlang der Navigationsroute basierend auf den Fahrzeugabmessungen.

DE 10 2013 222960 A1 beschreibt ein Navigationssystem zur Ermittlung von qualifizierten Sonderzielen mit einer Datenbank, in der Verkehrswegknoten sowie diese verbindende Wegstücke und deren Eigenschaften gespeichert sind, mit einer Routenberechnungseinrichtung sowie mit einer Speichereinrichtung, wobei in der Datenbank abgespeicherte Sonderziele jeweils mit einem oder mehreren Anschlussknoten, insbesondere Autobahnabfahrten, verknüpft sind und wobei jedem Sonderziel bezüglich jedes mit diesem verknüpften Anschlussknotens wenigstens ein erster, das Sonderziel und den Anschlussknoten miteinander verbindender Gesamtweg sowie eine Gesamtweglänge zugeordnet ist und wobei wenigstens in dem Fall, dass der erste Gesamtweg eine Nutzungsbeschränkung aufweist, dem Sonderziel und dem Anschlussknoten noch wenigstens ein zweiter Gesamtweg zugeordnet ist, der wenigstens bezüglich eines Beschränkungsparameters geringere Nutzungsbeschränkungen aufweist.

US 2016 290 815 A1 beschreibt ein Navigationsverfahren mit den Schritten: Erhalten von Statusinformationen eines oder mehrerer Reifen eines Fahrzeugs; Erhalten von Straßenzustandsinformationen in Echtzeit; und Durchführen einer Routennavigation für das Fahrzeug gemäß den Statusinformationen, den Straßenzustandsinformationen und einer voreingestellten Navigationsstrategie.

DE 10 2012 011224 A1 beschreibt ein Verfahren zur Warnung eines Fahrers eines Fahrzeugs vor einem Einfahren in einen Verkehrsbereich eines Straßenverkehrsnetzes, für den nach Einfahrt des Fahrzeugs eine Weiterfahrt des Fahrzeugs zu einem Anschlussziel nicht oder nur durch Ausführen von vorgegebenen Sondermanövern des Fahrzeugs möglich ist und ein zur Ausführung des Verfahrens eingerichtetes Fahrerassistenzsystem.

### KURZER UMRISS DER OFFENBARUNG

Die Aufgabe der Offenbarung wird durch den Gegenstand des Anspruchs 1 gelöst. Vorteilhafte Ausführungsformen sind durch den Gegenstand der abhängigen Ansprüche angegeben.

Gemäß dem Verfahren kann die Planung einer Route für den Transport sowie dessen Durchführung vereinfacht, verbessert und/oder beschleunigt werden. Durch die Steigerung der Effizienz können beispielsweise Kosten sowie Ressourcen eingespart werden. Ferner kann die Sicherheit während des Transportes durch das Verfahren gewährleistet oder erhöht werden. Des Weiteren kann gemäß dem Verfahren der Genehmigungsprozess, der beispielsweise die Antragstellung und den Erteilungsprozess umfasst, sowie dessen Implementierung zumindest teilweise automatisch durchgeführt oder maschinell unterstützt werden. Dadurch kann der Transport, von der Planung bis zur Durchführung, vereinfacht und verbessert werden.

In der vorliegenden Offenbarung, sofern nichts anderes angegeben, kann der Begriff Transport, nebst der allgemeinen Bedeutung, den Schwertransport, den Großraumtransport und/oder Ausnahmetransport entsprechend den üblichen Definitionen oder eine beliebige Kombination hiervon umfassen. Der Transport kann sich auf den Vorgang beziehen, bei dem ein Transportgut vom Startpunkt bis zum Zielpunkt transportiert oder befördert wird. Alternativ oder zusätzlich kann, je nach Kontext der vorliegenden Offenbarung, der Begriff Transport die Zugmaschine und das Transportgut des Transportes betreffen. Das Transportgut kann einen oder mehrere materielle Gegenstände umfassen. Das Transportgut kann beispielsweise zumindest einen Teil eines Bauwerks oder einer Maschine, wie z.B. eines Schiffs, eines Flugzeugs, eines Fahrzeugs, eines Krans, eines Kranballasts oder eines Autokrans, umfassen. Das Transportgut kann teilbare Ladungen oder eine unteilbare Ladung umfassen. Das Transportgut, oder das Transportfahrzeug, kann eine selbstfahrende Maschine sein oder umfassen.

Ein computerimplementiertes Verfahren kann sich auf eine oder mehrere Verfahrensschritte, oder Operationen, beziehen, die logisch, sequentiell oder auf sonstige Weise miteinander verknüpft sein können und von einem Computer, einem Computernetzwerk, einem Server-Client-System oder anderen herkömmlichen programmierbaren und/oder digitalen Vorrichtungen ausführbar sind.

Die Operationen können als maschinenlesbare Anweisungen ausgeführt werden. Zum Beispiel können die Operationen als maschinenlesbare Anweisungen in einem Quellcode, Objektcode, ausführbaren Code oder anderen Formaten existieren. Insbesondere können manche oder alle Verfahrensschritte des computerimplementierten Verfahrens automatisch, z.B. ohne Zutun oder Eingriff durch einen menschlichen Benutzer, ausführbar sein. Im Folgenden werden die Begriffe Verfahrensschritte, Operationen und Anweisungen mit Bezug auf das computerimplementierte Verfahren, sofern nichts anderes angegeben, als austauschbare Synonyme verwendet.

Das computerimplementierte Verfahren sowie seine Anweisungen können beispielsweise als ein Dienstprogramm, Programm oder Unterprogramm auf einem computerlesbaren Speichermedium und/oder auf einer Hardware gespeichert sein. Das computerlesbare Speichermedium kann ein beliebiges Speichermedium sein, das geeignet ist, das computerimplementierte Verfahren, seine Anweisungen abrufbar bereitzustellen.

Das computerlesbare Medium kann ein nichtflüchtiges Speichermedium umfassen, wie beispielsweise eine optische oder magnetische Platte. Alternativ oder zusätzlich kann das computerlesbare Medium ein flüchtiges Medium umfassen, wie beispielsweise einen elektrischen Daten-, Arbeits- oder Hauptspeicher. Das computerlesbare Medium kann weitere maschinenlesbare Anweisungen zusätzlich zu den Anweisungen des computerimplementierten Verfahrens speichern. Beispielsweise kann das computerlesbare Medium Anweisungen speichern, die von einem Netzwerk oder dem Internet heruntergeladen werden.

Die Karte kann eine digitale, verkleinerte Darstellung eines geografischen oder topografischen Gebietes sein. Das in der Karte dargestellte Gebiet kann vordefiniert sein. Beispielsweise kann die Karte das Gebiet der Bundesrepublik Deutschland, von Europa oder ein beliebiges anderes Gebiet der Welt darstellen. Die Karte kann zumindest teilweise interaktiv sein, sodass ein Benutzer das dargestellte Gebiet und das Maßstab hierfür selbst einstellen kann.

Die Karte kann beispielsweise Straßen, Wege, Bahnlinien, Verlauf von Gewässern, Höhenprofile, politische oder sonstige Gebietsgrenzen beinhalten. Beispielsweise kann die Karte zwischen unterschiedlichen Straßentypen grafisch differenzieren. Beispiels für die Straßentypen umfassen Autobahnen, autobahnähnliche Straßen, Fernverkehrsstraßen, Kraftfahrstraßen, Autostraßen, Europa-, Bundes-, Land-, Staats-, Gemeinde- und Ortsstraßen, Ortsdurchfahrt, Feld- und Waldwege, Fahrradwege, Fußwege oder Fußgängerzonen. Des Weiteren können die Straßen nach Straßenkategorien, nach Straßenbaulastträger oder nach gesetzlichen Regelungen eingeteilt sein.

Die Karte kann als eine digitale Karte bereitgestellt sein. Die Karte kann eine Rasterkarte oder eine Vektorkarte sein. Die Karte kann als Offline-Karte auf einzelnen Endgeräten oder Client-Einrichtungen bereitgestellt sein oder als Online-Karte von einem und/oder über ein Netzwerk, von einem Server, von einer Cloud oder sonstigen Einrichtungen abrufbar sein. Die Karte kann als eine einzige Karte bereitgestellt sein und/oder sich aus mehreren Karten oder Kartenabschnitten zusammensetzen.

Der Startpunkt kann den geografischen oder topografischen Ort kennzeichnen, an dem der Transport startet. Alternativ oder zusätzlich kann der Startpunkt den aktuellen Standort eines Benutzers kennzeichnen. Der Zielpunkt kann den geografischen oder topografischen Ort kennzeichnen, an dem der Transport endet. In manchen Beispielen kann ein Zwischenpunkt auf einer ausgewählten Route als der Startpunkt betrachtet werden.

Für das Bestimmen des Startpunkts und des Zielpunkts in der Karte kann eine Benutzerschnittstelle bereitgestellt sein, über welche ein Benutzer den Start- und Zielpunkt eingeben kann. Die Eingabe des Start- und Zielpunkts kann über beliebige Eingabegeräte, z.B. Maus, Keyboard oder Touchscreen, erfolgen. Alternativ oder zusätzlich können die Anschriften des Start- und Zielpunkts von einer Datenbank abgerufen oder über eine Plattform oder als ein Formular empfangen werden. In weiteren Beispielen können der Start- und Zielpunkt auf der Karte, z.B. über Touchscreen, ausgewählt werden. Der Startpunkt und/oder der Zielpunkt können in der Karte grafisch dargestellt werden.

Die Transportdaten umfassen die Abmessungen und das Gewicht eines Transportfahrzeugs mit oder ohne Transportgut. Die Transportdaten können von Spezifikationen eines Transportfahrzeugs samt Transportgut abhängen, die eine Breite, eine Höhe, eine Länge, eine Achslast und/oder ein Gewicht betreffen. Die Achslast kann sich auf eine beliebige Achse eines Transportfahrzeugs beziehen.

Die Transportdaten umfassen die Abmessungen eines Transportfahrzeugs samt Transportgut, das zu transportieren gilt. In einem konkreten Beispiel können die Transportdaten umfassen: eine Gesamtlänge von 10 m bis 200 m; eine Breite von 2 m bis 200 m; eine Höhe von 2 m bis 100 m; eine Achslast von 1 Tonne bis 500 Tonnen; und ein Gewicht von 1 Tonne bis 1000 Tonnen. In einem weiteren Beispiel beträgt die Gesamtlänge 20 bis 50 Meter. Die Gesamthöhe kann 3 bis 10 Meter betragen. Das Gesamtgewicht kann 2 bis mehrere Tausend Tonnen, beispielsweise 40 bis 1000 Tonnen, betragen. Ferner können die Transportdaten die Größe des Wendekreises eines Transportfahrzeugs beinhalten. Der Wendekreis kann aus den vorhandenen Transportdaten berechenbar sein.

Das Erfassen der Transportdaten kann per Eingabe über eine Benutzerschnittstelle mittels geeigneter Eingabegeräte erfolgen. Alternativ oder zusätzlich können die Transportdaten von einer Datenbank, einem Server oder einer Cloud abgerufen werden. Die Transportdaten können ferner über ein Netzwerk oder eine Plattform abgerufen werden. Die Transportdaten können als eine vordefinierte Datenstruktur und/oder in einem bestimmten Datenformat empfangen werden.

Die mindestens eine erste Route kann jede beliebige topografische Verbindung zwischen dem Startpunkt und dem Zielpunkt umfassen. Insbesondere können mehrere erste Routen bestimmt werden, die jeweils den Startpunkt mit dem Zielpunkt verbinden oder geeignet sind, generell einen Transport von dem Startpunkt zu dem Zielpunkt zu ermöglichen. Die mindestens eine Route kann basierend auf den Informationen aus der bereitgestellten Karte bestimmt werden. Für das Ermitteln der mindestens einen ersten Route kann ein geeigneter Algorithmus verwendet werden. Beispielsweise kann die mindestens eine Route basierend auf einem oder mehreren der Folgenden bestimmt werden: eine Streckenbemaßung, eigens erfasste Daten eines Benutzers, Daten aus einer Datenbank des Anbieters eines Navigationssystems, Daten aus einer Datenbank eines Vertreibers oder Administrators des computerimplementierten Verfahrens, Daten eines Drittanbieters, öffentlich zugänglichen Daten, amtlichen Daten, und Daten aus vergangenen Transporten.

Beispielsweise kann die mindestens eine erste Route ermittelt werden, indem alle möglichen topografischen Verbindungen von dem Startpunkt bis zu dem Zielpunkt ermittelt werden. Bei der Ermittlung der ersten Route können die Transportdaten zunächst unberücksichtigt, teilweise berücksichtigt oder vollständig berücksichtigt sein. Auch die Beschaffenheit der Umgebung der jeweiligen ersten Route kann zunächst unberücksichtigt, teilweise berücksichtigt oder vollständig berücksichtigt sein.

Die dreidimensionalen Hindernisdaten können Informationen über die Beschaffenheit der Umgebung enthalten. Beispielsweise umfassen die dreidimensionalen Hindernisdaten eine dreidimensionale Abbildung der Umgebung der mindestens einen ersten Route. Ein einzelnes dreidimensionales Hindernisdatum kann beispielsweise die dreidimensionalen Beschaffenheit eines kartografischen Punkts, einer Strecke, eines Streckenabschnitts, einer Passage, eines verkehrsrelevanten Merkmals, einer Bauwerkstruktur, einer landschaftlichen Umgebungsbeschaffenheit oder dergleichen oder eine beliebige Kombination hiervon umfassen.

Beispielsweise umfassen die dreidimensionalen Hindernisdaten mindestens eines der Folgenden: eine maximale Durchfahrtshöhe, eine maximal zulässige Breite, einen Wendekreis, und ein maximal zulässiges Gewicht. Der Wendekreis kann sich dabei auf eine Krümmung einer gekurvten Straße oder auf eine Abbiegung beziehen. Die dreidimensionalen Hindernisdaten können eine oder mehrere Kombinationen derartiger Angaben umfassen.

Die dreidimensionalen Hindernisdaten können vorgespeichert vorliegen. Die dreidimensionalen Hindernisdaten können erstellt, aktualisiert, korrigiert oder geändert werden. Die dreidimensionalen Hindernisdaten können in einer Datenbank abgelegt sein und entsprechend der ermittelten mindestens einen ersten Route ausgewählt werden.

Die dreidimensionalen Hindernisdaten können von einem Benutzer eingegeben sein. Hierzu kann eine Benutzerschnittstelle bereitgestellt sein, über die ein Benutzer mittels beliebiger geeigneter Eingabegeräte die dreidimensionalen Hindernisdaten eingeben kann. Beispielsweise kann das computerimplementierte Verfahren eine Schnittstelle zum Empfangen zumindest einiger der dreidimensionalen Hindernisdaten von einem Benutzer bereitstellen.

Alternativ oder zusätzlich können die dreidimensionalen Hindernisdaten von einer zentralen Einrichtung über z.B. ein Netzwerk, einen Server, eine Cloud oder dergleichen bereitgestellt und abrufbar sein. Eine derartige zentrale Einrichtung kann beispielsweise von einer Behörde, einem Anbieter und/oder einem Betreiber betrieben sein.

Ferner können die dreidimensionalen Hindernisdaten mithilfe einer mobilen Erfassungseinheit erfasst werden. Die mobile Erfassungseinheit kann eingerichtet sein, eine dreidimensionale Abbildung von Umgebungen der mindestens einen ersten Route zu erstellen. Die mobile Erfassungseinheit kann als ein mobile mapping system bereitgestellt sein. Beispielsweise ist die mobile Erfassungseinrichtung in der Lage, die Strecken der mindestens einen Route durchzufahren und währenddessen Aufnahmen der Umgebung zu erstellen. Die mobile Erfassungseinheit kann mit einer Recheneinheit und/oder einer Speichereinheit versehen sein. Die mobile Einrichtung kann eingerichtet sein, die dreidimensionale Abbildung zu erstellen. Alternativ oder zusätzlich kann die mobile Erfassungseinheit die erfassten Daten an eine zentrale Einrichtung übermitteln, die die dreidimensionale Abbildung erstellt. Die mobile Einrichtung kann zudem GPS-gestützt sein, um die dreidimensionale Abbildung einer Position zuzuordnen. Es können zwei oder mehr mobile Einrichtungen eingesetzt sein, mittels welcher die dreidimensionalen Hindernisdaten erfasst werden.

Des Weiteren können die dreidimensionalen Hindernisdaten mittels Abstandsmessung entlang der mindestens einen ersten Route erfasst werden. Die Abstandsmessung kann über optische Abstandsmessung, elektromagnetische Abstandsmessung und/oder akustische Abstandsmessung erfolgen. Beispielsweise umfasst die Abstandsmessung ein LiDAR-(light detection and ranging), LADAR- (laser detection and ranging) und/oder RADAR- (radio detection and ranging) basiertes Verfahren. Die Abstandsmessung kann GPS-gestützt durchgeführt werden. Die Abstandsmessung kann beispielsweise durch eine oder mehrere mobile Erfassungseinheiten erfolgen.

Bei der Erstellung der dreidimensionalen Abbildung und/oder bei der Abstandsmessung auf der mindestens einen ersten Route kann insbesondere eine Punktwolke erzeugt werden. Die Punktwolke kann eine räumliche und/oder topografische Nachbildung der Umgebungen der mindestens einen ersten Route sein. Insbesondere kann die Punktwolke die räumliche Struktur der Umgebungen der mindestens einen ersten Route näherungsweise rekonstruieren. Die Punktwolke bzw. die dreidimensionale Abbildung der Umgebungen kann ein oder mehrere dreidimensionale Hindernisse auf der mindestens einen ersten Route visuell kenntlich machen. Die Umgebungen können infrastrukturelle Information auf der mindestens einen ersten Route umfassen, zum Beispiel eine Streckenführung, ein oder mehrere Bauwerke und/oder sonstige Hindernisse.

Die mobile Erfassungseinheit kann als ein Fahrzeug bereitgestellt sein. Die mobile Erfassungseinheit kann mit einer hochauflösenden Aufnahmevorrichtung und/oder einer geeigneten Vorrichtung zur hierin beschriebenen Abstandsmessung ausgestattet sein. Zum Beispiel umfasst die mobile Erfassungseinheit eine oder mehrere Kameras und/oder einen oder mehrere Laser-Scanner. Beispielsweise fährt die mobile Erfassungseinheit entlang der mindestens einer ersten Route und führt während der Fahrt Abstandsmessungen durch und/oder erstellt eine dreidimensionale Abbildung von Umgebungen der befahrenen Strecke. Insbesondere kann die mobile Erfassungseinheit mit einer geeigneten Rechen- und Speicherkapazität ausgestattet sein, um eine Punktwolke der Umgebungen der befahrenen Strecke bzw. der mindestens einen ersten Route zu erstellen. Die mobile Erfassungseinheit kann ferner mit einem geeigneten Sensorsystem (Inertialsensorik) ausgestattet sein, die eingerichtet ist, eine Position und Geschwindigkeit der mobilen Erfassungseinheit während der Fahrt aufzuzeichnen. Auf diese Weise kann eine präzise Trajektorie bzw. Fahrweg der mindestens einen ersten Route erstellt werden.

Die mobile Erfassungseinheit kann zudem eingerichtet sein, die positions- und geschwindigkeitsbezogenen Daten sowie die Daten aus der Abstandsmessung und/oder aus der dreidimensionalen Abbildung zu speichern. Die gespeicherten Daten können zur Auswertung und zur weiteren Berechnung bereitgestellt werden. Die Daten können in Echtzeit während der Fahrt, nach der Fahrt, zeitlich versetzt und/oder ferngesteuert in ein geeignetes Dateiformat umgewandelt, gespeichert und/oder vorverarbeitet werden. Insbesondere können die Daten in (näherungsweise) Echtzeit dem Fahrer der mobilen Erfassungseinheit zur Verfügung gestellt werden. Die Daten können in (näherungsweise) Echtzeit oder nach Beendigung einer Fahrt einer zentralen Servereinrichtung übermittelt werden. Die Berechnung der Schleppkurve kann auf der mobilen Erfassungseinheit durchgeführt werden, die die erforderliche Rechen- und Speicherkapazität aufweisen kann. Alternativ oder zusätzlich kann die Berechnung der Schleppkurve durch die zentrale Servereinrichtung durchgeführt werden, die die gemessenen und/oder vorverarbeiten Daten von der mobilen Erfassungseinheit empfängt.

Somit können präzise und zeitnah aktualisierbare dreidimensionale Hindernisdaten erhalten werden. Insbesondere können die so erhaltenen dreidimensionalen Hindernisdaten präziser und aktueller sein als diejenigen mittels herkömmlicher Verfahren, z.B. über Auswertung von Satelliten- oder Luftbildern. Zudem sind die so erhaltenen dreidimensionalen Hindernisdaten weniger anfällig für Störeinflüsse, wie beispielsweise wetterbedingte Messungenauigkeiten (z.B. bei Nebel oder Starkregen) und Ungenauigkeit der GPSgestützten Positionsbestimmung.

Die zweite Route kann einem Ergebnis der Routenplanung entsprechen. Insbesondere gibt die zweite Route diejenige Route wieder, die für den Transport geeignet ist. Die zweite Route entspricht einer der mindestens einen ersten Route, einer Kombination und/oder einer Abwandlung hiervon. Es ist also möglich, eine der ersten Routen als die zweite Route zu erstellen bzw. zu bestimmen. Bei der Erstellung der zweiten Route werden die Transportdaten und die dreidimensionalen Hindernisdaten berücksichtigt.

Beispielsweise wird bei der Erstellung der zweiten Route auf mögliche Kollisionen der Transportdaten mit den dreidimensionalen Hindernisdaten überprüft. Im Verfahren kann vorgesehen sein, dass die dreidimensionalen Hindernisdaten auf die Vereinbarkeit mit den Transportdaten überprüft werden. Hierzu kann beispielsweise eine dreidimensionale Simulation durchgeführt werden, in welcher Durchfahrt eines Transportfahrzeugs mit den Transportdaten entlang der jeweiligen Route geführt wird.

Diejenigen ersten Routen werden für den Transport ausgeschlossen, die an mindestens einer Position dreidimensionale Hindernisdaten aufweisen, die den Transportdaten nicht genügen. Dies kann der Fall sein, z.B. wenn die erste Route an der Position oder in der Teilstrecke zu schmal ist, zu niedrig ist, eine zu scharfe Kurve aufweist, das Gewicht des Transportes das maximale zulässige Gewicht überschreitet, usw. Die dreidimensionalen Hindernisdaten können zeitlich variabel oder befristet sein, z.B. wegen einer Baustelle, eines Straßenschadens, einer Einwirkung der Umwelt oder einer sonstigen Behinderung. Derartige Hindernisdaten können beispielsweise mithilfe von mobilen Erfassungseinheiten erfasst werden.

Ferner ist es möglich, dass diejenigen ersten Routen, deren dreidimensionale Hindernisdaten mit den Transportdaten vereinbar sind, modifiziert werden, um den Transport zu ermöglichen. Beispielsweise wird ein Bauwerk, wie z.B. eine Unterführung oder ein Tunnel, in der Mitte durchgefahren, um eine Kollision des Transportfahrzeugs und/oder des Transportguts mit dem Bauwerk zu vermeiden. In einem Beispiel wird eine Verkehrsinsel, die üblicherweise gegen den Uhrzeigersinn umfahren wird, im Uhrzeigersinn umfahren, um eine Abbiegung zu ermöglichen.

Beispielsweise können mehrere erste Routen von dem Startpunkt bis zu dem Zielpunkt in der Karte ermittelt sein. Die mehreren ersten Routen können basierend lediglich auf den kartografischen oder topografischen Informationen ermittelt sein. Es kann sich ergeben, dass, aufgrund der dreidimensionalen Hindernisdaten oder der Transportdaten, nur eine Auswahl aus den mehreren ersten Routen für den Transport geeignet ist. Gemäß dem beanspruchten Verfahren können diejenigen ersten Routen, die für den Transport ungeeignet sind, aussortiert oder ausgeschlossen werden. Für die übrig bleibenden ersten Routen kann jeweils eine Berechnung unter Berücksichtigung der dreidimensionalen Hindernisdaten sowie der Transportdaten durchgeführt werden, wie der Transport durchzuführen ist. Die Berechnung kann eine oder mehrere zweite Routen als Ergebnis ausgeben.

Gemäß einem Bespiel kann jeweils eine zweite Route für jede der mehreren ersten Routen erstellt werden. Folglich können mehrere zweite Routen als Ergebnis vorliegen. Eine der mehreren zweiten Routen kann für den Transport ausgewählt werden. Die Wahl der zweiten Route kann unter Berücksichtigung unterschiedlicher Kriterien erfolgen. Insbesondere kann die zweite Route ausgewählt werden, die eine geringste geschätzte Dauer und/oder eine geringste Distanz zwischen dem Start- und dem Zielpunkt aufweist. Weitere denkbare Kriterien umfassen geringe anfallende Gebühren, geringer Kraftstoffverbrauch, geringe zurückzulegende Höhenmeter, geringe Störung für den Verkehr, Einhaltung der Mindestbreite aufgrund der Begleitfahrzeuge, etc. Dadurch können insbesondere die Verkehrssicherheit und/oder wirtschaftliche Interessen berücksichtigt werden. Ferner kann die zweite Route unter Einhaltung etwaiger Auflagen einer autorisierten Behörde erstellt werden.

Das computerimplementierten Verfahren kann weiterhin die Ausführung des Transports gemäß den Transportdaten betreffen. Zunächst werden die dreidimensionalen Hindernisdaten auf Vereinbarkeit mit den Transportdaten überprüft. Das Überprüfen ergibt mindestens eines aus dem Folgenden:
Durchfahrt ohne Anweisungen;
Durchfahrt unmöglich; und Durchfahrt mit Anweisungen.

Gemäß der Erfindung werden Hindernispositionen zugehörig zu den dreidimensionalen Hindernisdaten bestimmt, die in einer Speichervorrichtung gespeichert werden. Dann wird eine Position eines Transportfahrzeugs erfasst, wobei das Transportfahrzeug die Transportdaten aufweist. Mit dem Begriff Transportfahrzeug wird vereinfachend das Transportfahrzeug samt Transportgut bezeichnet. Die Bestimmung der Position des Transportfahrzeugs kann mithilfe von GPS-Positionsbestimmung erfolgen. Allgemein kann ein beliebiges geeignetes Positionsbestimmungsverfahren verwendet werden, um die Position des Transportfahrzeugs zu bestimmen, wie beispielsweise proximity sensing z.B. über ein Funknetz, Trilateration z.B. mithilfe von Satelliten, Koppelnavigation, etc. Eine nächste Hindernisposition aus den Hindernispositionen wird bestimmt, welche am nächsten zu der Position des Transportfahrzeugs ist.

Falls das Überprüfen für die dreidimensionalen Hindernisdaten, welchen die nächste Hindernisposition zugehörig ist, Durchfahrt mit Anweisungen umfasst, wird ein Hinweis auf eines der Folgenden bereitgestellt: die nächste Hindernisposition; die dreidimensionalen Hindernisdaten, welchen die nächste Hindernisposition zugehörig ist; und Anweisungen zur Durchfahrt der dreidimensionalen Hindernisdaten, welchen die nächste Hindernisposition zugehörig ist.

Der Hinweis kann auf mindestens einer Ausgabevorrichtung in dem Transportfahrzeug bereitgestellt werden. Zusätzlich oder alternativ kann der Hinweis auf einer Ausgabevorrichtung in einem Begleitfahrzeug bereitgestellt werden.

Gemäß dem beschriebenen Gegenstand kann vor- und rechtzeitig auf ein nahendes Event hingewiesen werden, das gemäß den dreidimensionalen Hindernisdaten eine erhöhte Aufmerksamkeit, ein besonderes Manöver, eine Geschwindigkeitsänderung oder eine sonstige Besonderheit während des Transports erfordert. Somit kann die Sicherheit für den Transport, insbesondere im Hinblick auf das Transportgut, das Transportfahrzeug, den Transportführer sowie die Umwelt und andere Verkehrsteilnehmer und Dritte gewährleistet oder erhöht sein. Ferner kann die Hinweisfunktion eine menschliche Begleitperson ersetzen, wodurch der Ressourcenbedarf für den Transport gesenkt werden kann.

Gemäß einem Beispiel wird eine dreidimensionale Abbildung von Umgebungen der mindestens einen ersten Route bereitgestellt. Die dreidimensionalen Hindernisdaten auf der mindestens einen ersten Route werden basierend auf der dreidimensionalen Abbildung von Umgebungen der mindestens einen ersten Route erfasst. Eine Schleppkurve des Transportes in einem gekrümmten Streckenabschnitt der mindestens einen ersten Route wird basierend auf den dreidimensionalen Hindernisdaten und den Transportdaten bestimmt. Dies ermöglicht eine genaue Auswertung, ob der Transport durch einen gegebenen gekrümmten Streckenabschnitt passierbar ist. Somit kann eine präzise Kollisionsanalyse des Transportes mit den dreidimensionalen Hindernisdaten ermöglicht sein. Ferner kann auf diese Weise ein für die Durchfahrt des gekrümmten Streckenabschnitts erforderliches Manöver für den Transport ermittelt werden.

Der Begriff Schleppkurve kann gemäß den Lehren der Geometrie bestimmt sein. Die Schleppkurve kann sich insbesondere auf eine Fläche oder ein Volumen beziehen, die/das der Transport beim Durchfahren des gekrümmten Streckenabschnitts belegt. Somit kann die Schleppkurve einem Kurvenverlauf des Transportes entsprechen. Mithilfe der Schleppkurve kann insbesondere ein zu erwartendes Fahrverhalten des Transportes beim Durchfahren des gekrümmten Streckenabschnitts modelliert werden. Ferner kann auf diese Weise eine optimale Fahrlinie für das Durchfahren des gekrümmten Streckenabschnitts durch den Transport berechnet werden. Bei der Bestimmung der Schleppkurve können Parameter wie z.B. ein Spurstand, einer Fahrgeschwindigkeit, ein oder mehrere Krümmungsradien, eine Gesamt- oder Teillänge (z.B. bei einem mehrgliedrigen Transport), relative Achsenpositionen, Gliederung (z.B. Zugmaschine, Sattelauflieger, Nachläufer, etc.) und/oder eine Anzahl und jeweilige Art der Achsen (z.B. fixiert oder lenkbar) des Transportes berücksichtigt werden. Die Schleppkurve kann der auch als eine Traktrix, Ziehkurve, Zugkurve oder Treidelkurve gemäß den Lehren der Geometrie bezeichnet werden.

Für die Bestimmung der Schleppkurven können die Daten aus der dreidimensionalen Abbildung und/oder der Abstandsmessung für den jeweiligen gekrümmten Streckenabschnitt verwendet werden. Insbesondere kann eine Punktwolke erzeugt werden, die verwendet wird, um Umgebungen der mindestens einen ersten Route in besonderem Hinblick auf die räumliche Struktur näherungsweise zu rekonstruieren. Die Punktwolke kann durch die Abstandsmessung und/oder dreidimensionale Abbildung erhalten sein. Basierend auf den Transportdaten, insbesondere der Abmessungen des Transportes, kann ein Modell des Transportes erzeugt werden und in die Punktwolke und/oder dreidimensionale Abbildung eingefügt werden, um die Schleppkurve zu bestimmen und eine Kollisionsanalyse durchzuführen. Beispielsweise können Überschwenkradien bestimmt werden.

Gemäß einem Beispiel kann ein oder mehrere Brückenbauwerke visuell angezeigt werden. Dies kann durch eine optische Hervorhebung des jeweiligen Brückenbauwerks in einer visuellen Anzeigevorrichtung und/oder durch eine auditive Meldung erfolgen. Die optische Hervorhebung und/oder die auditive Meldung können wiederholt erfolgen. Die optische Hervorhebung kann beispielsweise durch eine besondere Illustration des Brückenbauwerks (z.B. durch ein dreidimensionales Symbol oder ein Abbild des Brückenbauwerks), durch Blinken einer Hinweismeldung, durch eine vergrößerte Darstellung und/oder durch eine farbliche Kenntlichmachung (z.B. durch eine Farbe, die verschieden von der restlichen Route ist) erfolgen. Insbesondere werden eine Länge des jeweiligen Brückenbauwerks und/oder eine Besonderheit für die Befahrung des jeweiligen Brückenbauwerks angezeigt. Die Besonderheit kann dabei einer behördlichen Auflage für den jeweiligen Transport entnommen sein. Die Besonderheit umfasst beispielsweise eine zulässige maximale Traglast, eine vorgeschriebene Durchfahrtsgeschwindigkeit und/oder einen Mindestabstand zum Restverkehr. Zum Beispiel kann ein bestimmtes Brückenbauwerk, oder bestimmte oder alle Brückenbauwerke in einem bestimmten Gebiet (z.B. in einem bestimmten deutschen Bundesland) mit einer Höchstgeschwindigkeit von 5 km/h und unter Einhaltung eines Mindestabstands von 5 m zu anderen Fahrzeugen befahrbar sein. In anderen Gebieten oder für bestimmte andere Brückenbauwerke können andere Vorschriften gelten.

Ferner kann eine behördliche Auflage für die Befahrung des Brückenbauwerks in Form von Text und/oder Bild und/oder auditiv wiedergegeben werden. Dabei kann die behördliche Auflage in einer von mehreren verfügbaren Sprachen auswählbar sein, beispielsweise Deutsch, Englisch, Französisch, Italienisch, Spanisch, Portugiesisch, Polnisch, Tschechisch, Niederländisch, Dänisch und/oder Russisch. Gemäß einem Bespiel kann das Verfahren das Übersetzen von behördlichen Auflagen und/oder anderen Meldungen zwischen verschiedenen Sprachen umfassen. Dementsprechend kann eine Computereinrichtung eingerichtet sein, von behördlichen Auflagen und/oder anderen Meldungen zwischen verschiedenen Sprachen zu übersetzen.

Das oben beschriebene Verfahren ist zur Ausführung in einem Navigationssystem implementiert. Ein Navigationssystem ist eingerichtet, das oben beschriebene computerimplementierte Verfahren oder dessen Beispiele auszuführen. Das Navigationssystem gemäß dieser Offenbarung kann sich auf eine elektronische Vorrichtung und/oder auf einem Speichermedium gespeicherte, durch eine Rechnereinrichtung ausführbare Instruktionen beziehen, die zur Zielführung von einem gegebenen Ort hin zu einem gewünschten Zielort eingerichtet ist/sind. Insbesondere kann das Navigationssystem geeignet sein, einen Transport mit den oben erläuterten Transportdaten entlang der zweiten Route durchzuführen, die gemäß dem hierin offenbarten Verfahren erstellt ist.

Ferner betrifft die Offenbarung ein verteiltes Computersystem, ein System, zur Navigation. Das System umfasst ein Clientsystem und ein Serversystem, die kommunikativ miteinander gekoppelt sind. Das Clientsystem und/oder das Serversystem ist zum Ausführen des oben beschriebenen computerimplementierten Verfahrens eingerichtet. Das Clientsystem und/oder das Serversystem umfasst eine Speichervorrichtung zum Speichern und Bereitstellen mindestens eines der Folgenden: die Karte; die Transportdaten; die dreidimensionalen Hindernisdaten; die mindestens eine ersten Route; und die zweite Route.

Ferner offenbart ist eine Computereinrichtung, die geeignet ist, das hierin beschriebene Verfahren auszuführen. Zu diesem Zweck kann die Computereinrichtung geeignete Mittel zur Ausführung der einzelnen Verfahrensschritte umfassen. Ferner umfasst die Computereinrichtung das hierin offenbarte Navigationssystem. Des Weiteren offenbart ist ein Verfahren, das ein computerimplementiertes Verfahren sein kann.

Eine Computereinrichtung kann Folgendes umfassen: Mittel zum Erfassen von Transportdaten eines Transportes, wobei die Transportdaten ein Gesamtgewicht und/oder eine Achslast des Transports umfassen; Mittel zum Erfassen einer von dem Transport zurückgelegten Strecke; Mittel zum Auszeichnen eines Streckenabschnittes der von dem Transport zurückgelegten Strecke; und Mittel zum Bestimmen einer Belastung des ausgezeichneten Streckenabschnittes durch den Transport aufgrund der Transportdaten.

Gemäß einem Beispiel umfasst das Verfahren die Folgenden Schritte: Erfassen von Transportdaten eines Transportes, wobei die Transportdaten ein Gesamtgewicht und/oder eine Achslast des Transports umfassen; Erfassen einer von dem Transport zurückgelegten Strecke; Auszeichnen eines Streckenabschnittes der von dem Transport zurückgelegten Strecke; und Bestimmen einer Belastung des ausgezeichneten Streckenabschnittes durch den Transport aufgrund der Transportdaten. Die hierin beschriebenen Vorteile und Effekte der Computereinrichtung und deren Ausführungsbeispiele gelten auch für das Verfahren und dessen Ausführungsbeispiele und vice versa. Die nachfolgend beschriebenen Merkmale der Computereinrichtung können genauso für das Verfahren gelten.

Die Computereinrichtung kann eine Prozessoreinheit umfassen, die Operationen oder Anweisungen ausführen kann. Ferner kann die Computereinrichtung eine Speichereinheit umfassen, die für die Ausführung der Operationen oder Anweisungen erforderlichen Daten speichert, Das Speichern der Daten kann je nach Ausgestaltung der Computereinrichtung und der auszuführenden Operationen oder Anweisungen dauerhaft sein oder vorübergehend (d.h. eine Zwischenspeicherung) sein.

Die Computereinrichtung kann eine stationäre Computereinrichtung umfassen, wie z.B. eine Server-Vorrichtung oder ein Personal Computer. Alternativ oder zusätzlich kann die Computereinrichtung eine mobile Computereinrichtung umfassen, wie z.B. ein Laptop, ein Notebook, ein Tablet, ein Smartphone oder ein PDA. Die Computereinrichtung kann ferner eine Client-Vorrichtung umfassen.

Die Computereinrichtung kann eine Übermittlungseinheit umfassen, über welche sie mit einer anderen, separaten Computereinrichtung kommunizieren kann. Das Kommunizieren kann Senden und Empfangen von Daten umfassen. Das Kommunizieren zwischen mehreren Computereinrichtungen über die Übermittlungseinheit kann kabelgebunden oder kabellos erfolgen. Beispielsweise erfolgt das Kommunizieren über die Übermittlungseinheit über das Internet.

Des Weiteren kann die Computereinrichtung eine I/O-Einheit umfassen zum Empfangen von Eingaben eines Benutzers und zum Ausgeben von Informationen für die Wahrnehmung durch einen Benutzer. Die Computereinrichtung kann eine Anschlusseinheit umfassen, über die eine zusätzliche Vorrichtung für die Ausführung einer oder mehreren Operationen oder Anweisungen angeschlossen werden kann.

Die hierin genannten Mittel der Computereinrichtung können gemäß ihrer jeweiligen Funktion einer oder mehreren physischen Einheiten der Computereinrichtung zugeordnet sein. Die Zuordnung der Mittel zu den physischen Einheiten der Computereinrichtung kann logisch, funktionell und/oder strukturell erfolgen.

Die Computereinrichtung kann eingerichtet sein, Anweisungen zu empfangen und/oder auszuführen, die Folgendes umfassen: Erfassen von Transportdaten eines Transportes, wobei die Transportdaten ein Gesamtgewicht und/oder eine Achslast des Transports umfassen; Erfassen einer von dem Transport zurückgelegten Strecke; Auszeichnen eines Streckenabschnittes der von dem Transport zurückgelegten Strecke; und Bestimmen einer Belastung des ausgezeichneten Streckenabschnittes durch den Transport aufgrund der Transportdaten. Die Anweisungen können in einem computerlesbaren Speichermedium bereitgestellt sein. Die hierin offenbarten Anweisungen, die von der Computereinrichtung ausführbar sind, können Teil eines computerimplementierten Verfahrens sein.

Der Transport sowie die Transportdaten sind vorstehend näher erläutert. Insbesondere können die Transportdaten des Transportes das Gewicht und die Achslast umfassen, die wesentlich für die Belastung eines Streckenabschnitts von besonderer Bedeutung sein können. Der Begriff Gewicht kann sich insbesondere auf das Gesamtgewicht des Transportes beziehen, beispielsweise das kombinierte Gewicht des Transportgutes und der Zugmaschine für den Transport desselben. In manchen Fällen wird der Transport von Begleitfahrzeugen begleitet und/oder es findet der sonstige Straßenverkehr während des Transportes statt. Das Gewicht kann unter Umständen das Gewicht der Begleitfahrzeuge und/oder des sonstigen Straßenverkehrs mit berücksichtigen. Der Transport kann mindestens für zwei Achsen verschiedene Achslasten aufweisen.

Das Erfassen einer Strecke, die von dem Transport zurückgelegt wird, kann in Echtzeit während des Transportes erfolgen. Beispielsweise wird die aktuelle Position des Transportes in vorbestimmten Zeitabständen erfasst und aufgezeichnet. Zusätzlich oder alternativ kann die Position des Transportes beim Passieren von vorbestimmten Abschnitten der Strecke aufgezeichnet werden. Die aufgezeichneten Positionen des Transportes können mit einem Zeitstempel versehen sein. Alternativ oder zusätzlich kann die Strecke nach der Beendigung des Transportes erfasst werden. Ferner kann die Strecke vor dem Transport bestimmt und nach dem Transport bestätigt werden. Das Erfassen der Strecke kann satellitengestützt erfolgen. Zusätzlich oder alternativ kann die Strecke durch die Angabe der gefahrenen Strecke erfolgen. Die zurückgelegte Strecke kann sich insbesondere auf die in Wirklichkeit gefahrene Strecke beziehen, die von der geplanten Strecke abweichen kann. Ferner kann die zurückgelegte Strecke eine der mehreren realisierbaren und/oder behördlich genehmigten Routen für den Transport sein.

Der ausgezeichnete Streckenabschnitt kann ein Abschnitt der Strecke sein, der sich verkehrstechnisch, (straßen-)bautechnisch, geographisch, wirtschaftlich, politisch und/oder sonstig von der restlichen Strecke unterscheidet. Insbesondere kann der ausgezeichnete Streckenabschnitt einem maximal zulässigen Gewicht unterliegen. Der ausgezeichnete Streckenabschnitt kann mit einem maximal zulässigen Gesamtgewicht, einer maximal zulässigen Achslast, einer maximal zulässigen Gesamtachslastüberrollung und/oder einer maximal zulässigen Durchfahrtgeschwindigkeit belegt sein. Beispielsweise kann der ausgezeichnete Streckenabschnitt ein Brückenbauwerk, eine Baustelle, einen Tunnel, eine Ortschaft, einen Kreisverkehrsplatz, etc. betreffen. Ein Brückenbauwerk kann eine Brücke oder eine Überführung für den Straßenverkehr umfassen.

Zusätzlich oder alternativ kann der ausgezeichnete Streckenabschnitt ein beliebig wählbarer Abschnitt der Strecke sein. Beispielsweise kann ein Abschnitt der Strecke ausgewählt sein, um die Belastung für den Fahrbahnbelag und/oder den Straßenoberbau auszuwerten.

Die Belastung des ausgezeichneten Streckenabschnitts kann bestimmt werden, indem bestätigt wird, dass ein Transport mit den Transportdaten, die das Gewicht und die Achslast des Transportes umfassen, den Streckenabschnitt passiert hat. Dies bewirkt, dass zuverlässig bestimmt wird, ob der Transport mit wieviel Gewicht und Achslast den ausgezeichneten Streckenabschnitt passiert hat. Auf diese Weise kann die tatsächliche Belastung des ausgezeichneten Streckenabschnitts zuverlässig bestimmt werden.

Gemäß einem Beispiel umfasst die Computereinrichtung ferner Mittel zum Speichern der Transportdaten und der bei dem Transport zurückgelegten Strecke. Hierzu kann die Computereinrichtung eine interne Speichereinheit umfassen und/oder mit einer entkoppelbaren Speichereinheit ausgestattet sein. Ferner kann die Computereinrichtung eine Servereinrichtung umfassen, beispielsweise eine Cloud-Speichereinrichtung. Demnach kann die Computereinrichtung eingerichtet sein, eine oder mehrere Anweisungen zum Speichern der Transportdaten und der bei dem Transport zurückgelegten Strecke auszuführen.

Gemäß einem Beispiel umfasst die Computereinrichtung ferner Mittel zum Übermitteln der Transportdaten und der von dem Transport zurückgelegten Strecke an eine separate Computereinrichtung. Die Computereinrichtung kann dementsprechend eingerichtet sein, eine oder mehrere Anweisungen zum Übermitteln der Transportdaten und der bei dem Transport zurückgelegten Strecke an eine separate Computereinrichtung auszuführen. Das Übermitteln kann an eine Server-Einrichtung erfolgen. Die separate Computereinrichtung, an die die Transportdaten und die zurückgelegte Strecke übermittelt werden, kann einer Behörde, einer Zentrale des Transporteurs und/oder einer Überwachungsstelle für die Überwachung des Transportes zugehören. Ferner kann die separate Computereinrichtung eingerichtet sein und/oder über Mittel verfügen, einen Streckenabschnitt auszuzeichnen und die Belastung des ausgezeichneten Abschnitts durch den Transport in der oben genannten Weise zu bestimmen. Die Übermittlung kann gemäß den Datenschutzbestimmungen anonymisiert erfolgen.

Gemäß einem Beispiel umfasst die Computereinrichtung ferner Mittel zum Erfassen mindestens eines weiteren Transportes, der innerhalb eines vorbestimmten Zeitraums den ausgezeichneten Streckenabschnitt befährt; Mittel zum Erfassen von Transportdaten des mindestens einen weiteren Transports, die ein Gesamtgewicht und/oder eine Achslast des jeweiligen weiteren Transports umfassen; und Mittel zum Bestimmen der Belastung des ausgezeichneten Streckenabschnittes zusätzlich durch den weiteren Transport aufgrund der zugehörigen Transportdaten. Die Computereinrichtung kann somit eingerichtet sein, die entsprechenden Anweisungen auszuführen. Gemäß diesem Beispiel können die jeweiligen Transportdaten von zwei oder mehr separaten Transporten erfasst werden, die den ausgezeichneten Streckenabschnitt befahren. Anhand der Gewichte und/oder Achslasten dieser Transporte kann zuverlässig bestimmt werden, welcher Belastung der ausgezeichneten Streckenabschnitt durch die erfassten Transporte ausgesetzt war.

Gemäß einem Beispiel umfassen die Transportdaten zusätzlich mindestens eines der Folgenden: eine Geschwindigkeit des Transportes während des Befahrens des ausgezeichneten Streckenabschnitts; eine Breite des Transportes; eine Reifenaufstandsfläche des Transportes; eine Achsenzahl des Transportes; und einen Achsenabstand des Transportes. Des Weiteren können die Transportdaten eine Spurweite, eine Anzahl von Reifen pro Achse, eine jeweilige Reifenbreite umfassen. Manche dieser Größen können als Achsbild gemäß den Lehren des Bauingenieurwesens zusammengefasst werden. Die Computereinrichtung kann dementsprechend eingerichtet sein, Anweisungen auszuführen, die mindestens eines der genannten Größen zu erfassen und für die Bestimmung der Belastung des ausgezeichneten Streckenabschnitts zu berücksichtigen. Die genannten Größen können zumindest teilweise rechnerisch zu der Belastung der Belastung des ausgezeichneten Streckenabschnitts beitragen. Der Beitrag der Transportdaten, insbesondere die einzelnen Beiträge der in den Transportdaten berücksichtigen Größen einschließlich des Gewichts und der Achslast, zu der Belastung des ausgezeichneten Streckenabschnitts kann durch gesetzliche Bestimmungen, Normen oder Standards bestimmt sein.

Zudem können die Transportdaten weitere Abmessungen eines Transportfahrzeugs des Transportes mit oder ohne Transportgut umfassen. Die Transportdaten können demnach eine Breite, eine Höhe, eine Länge und/oder einen Wendekreis des Transportes umfassen.

Des Weiteren können die Transportdaten eine Bereifung und/oder deren Eigenschaften umfassen. Demnach können die Transportdaten beispielsweise eine Anzahl der Reifen pro Achse, eine Materialzusammensetzung von einzelnen Reifen des Transportes, gegebenenfalls unterschiedliche Bereifung der einzelnen Reifen des Transportes oder dergleichen umfassen.

Die Transportdaten können ferner einen Reibungskoeffizienten und/oder einen Reibungswiderstand des Transportes umfassen. Der Reibungskoeffizienten und/oder der Reibungswiderstand können mit der Bereifung zusammenhängen. Der Reibungskoeffizienten und/oder der Reibungswiderstand können relativ zu einer Straßenoberfläche bestimmt sein. Insbesondere können die Transportdaten den Reibungskoeffizienten und/oder den Reibungswiderstand in Abhängigkeit von verschiedenen Straßenoberflächentypen erfassen, die Unterschiede in Griffigkeit aufweisen können. Beispielsweise umfasst der Straßenoberflächentyp Asphalt, Beton oder ein sonstiges Gemisch. Der Reibungskoeffizienten und/oder der Reibungswiderstand des Transportes können einen Einfluss auf den Wendekreis des Transportes haben und umgekehrt.

Gemäß einem Beispiel umfasst die Computereinrichtung ferner Mittel zum Erfassen eines Lastenbildes des Transportes beim Befahren des ausgezeichneten Streckenabschnitts. Die Computereinrichtung kann dementsprechend eingerichtet sein, Anweisungen zum Erfassen eines Lastenbildes des Transportes beim Befahren des ausgezeichneten Streckenabschnitts auszuführen. Das Lastenbild kann eine Position des Transportes quer zu der momentanen Fahrtrichtung während des Passierens des ausgezeichneten Streckenabschnitts umfassen. Beispielsweise umfasst der ausgezeichnete Streckenabschnitt mehrere Spuren und das Lastenbild erfasst auf welcher der mehreren Spuren des ausgezeichneten Streckenabschnitts der Transport gefahren ist. Alternativ oder zusätzlich kann das Lastenbild eine relative Position des Transportes relativ zu den Stützen eines Brückenbauwerks, eines Tunnels oder eines sonstigen Straßenbauwerks des ausgezeichneten Streckenabschnitts erfassen. Das Lastenbild kann der Bestimmung der Belastung des ausgezeichneten Streckenabschnitts durch den Transport zugrunde gelegt werden.

Gemäß einem Beispiel kann die Computereinrichtung ferner eingerichtet sein, die Belastung des ausgezeichneten Streckenabschnitts entlang und/oder quer zu einer befahrenden Richtung zu bestimmen. Die Computereinrichtung kann dementsprechend eingerichtet sein, Anweisungen zur Bestimmung der Belastung des ausgezeichneten Streckenabschnitts entlang und/oder quer zu einer befahrenden Richtung auszuführen. Auf diese Weise wird die Belastung nicht nur entlang einer Längsrichtung des ausgezeichneten Streckenabschnitts, sondern auch entlang einer Breitenrichtung desselben bestimmt. Somit kann eine vollständige oder zumindest eine umfassendere Analyse der Belastbarkeit des ausgezeichneten Streckenabschnitts ermöglicht.

In einem Beispiel bezieht sich der ausgezeichnete Streckenabschnitt explizit ein Brückenbauwerk, und die Computereinrichtung ist eingerichtet, die Belastung des ausgezeichneten Streckenabschnitts unter Berücksichtigung von Schnittgrößen des Brückenbauwerks zu bestimmen. Demnach kann die Computereinrichtung eingerichtet sein, Anweisungen zur Bestimmung der Belastung des ausgezeichneten Streckenabschnitts unter Berücksichtigung von Schnittgrößen des Brückenbauwerks auszuführen. Die Schnittgrößen können charakteristische Größen für die Belastbarkeit des ausgezeichneten Streckenabschnitts sein. Die Schnittgrößen können gemäß der Lehre aus dem Bauingenieurwesen definiert sein. Insbesondere können die Schnittgrößen denjenigen Kraftgrößen entsprechen, die der ausgezeichnete Streckenabschnitt gegen äußere Einwirkungen aufbringen muss, um nicht zu versagen, d.h. nicht einzustürzen, nicht irreversibel verformt zu werden, etc.

Gemäß einem Beispiel ist die Computereinrichtung ferner eingerichtet, die Belastung des ausgezeichneten Streckenabschnitts durch den Transport unter Berücksichtigung von Brückendaten zu bestimmen und/oder die darauf gerichteten Anweisungen auszuführen. Die Brückendaten umfassen mindestens eines der Folgenden: ein Trägertyp des Brückenbauwerks; eine Breite des Brückenbauwerks; und eine Geometrie des Brückenbauwerks. Somit kann eine individualisierte und damit präzise Analyse der Belastung des ausgezeichneten Streckenabschnitts ermöglicht sein.

Beispiele für den Trägertyp des Brückenbauwerks umfassen einen Einfeldträger, Durchlaufträger, einfeldriges Rahmentragwerk, einen Mehrfeldrahmen, ein Gewölbe, einen Bogen mit abgehängter oder aufgeständerter Fahrbahn, eine bewegliche Brücke, eine Behelfsbrücke, eine Trogbrücke, eine Schrägseilbrücke, eine Hängebrücke. Ferner kann der ausgezeichnete Streckenabschnitt eine Kombination hiervon sein oder eine Kombination eines Tunnelbauwerks und eines Brückenbauwerks sein.

Die Geometrie des Brückenbauwerks kann unter anderem eine Krümmung (falls vorhanden), eine Länge und/oder eine Höhe sowie eine Anzahl und Positionen von Stützen (falls vorhanden) des Brückenbauwerks umfassen.

Gemäß einem Beispiel ist die Computereinrichtung ferner eingerichtet, die Belastung des ausgezeichneten Streckenabschnitts unter Berücksichtigung einer Verkehrssituation während des Befahrens des ausgezeichneten Streckenabschnitts durch den Transport zu bestimmen und/oder darauf gerichtete Anweisungen auszuführen. Die Verkehrssituation kann beispielsweise eine momentane Verkehrsdichte in dem ausgezeichneten Streckenabschnitt während des Transportes betreffen. Ferner kann die Verkehrssituation eine stochastische Situation wie Unfall, Wetterbedingungen, Einschränkung der Sicht, etc. umfassen. Ein sonstiger Verkehr, der den nicht zu dem Transport zugehörigen Straßenverkehr bezeichnet, kann während des Transportes behördlich gesperrt oder freigegeben sein. Falls der ausgezeichnete Streckenabschnitt während des Transportes für den sonstigen Verkehr freigegeben ist, kann die zusätzliche Belastung des ausgezeichneten Streckenabschnitts durch den sonstigen Verkehr berücksichtigt werden, um die Gesamtbelastung desselben zu ermitteln. Hierdurch wird eine präzise wie zuverlässige Analyse der Belastung des ausgezeichneten Streckenabschnitts ermöglicht.

Gemäß einem Beispiel ist die Computereinrichtung ferner eingerichtet, mindestens eines der Folgenden über einen vorbestimmten Zeitraum statistisch zu erfassen: eine Nutzlast auf dem ausgezeichneten Streckenabschnitt; eine Einwirkung auf den ausgezeichneten Streckenabschnitt; und eine Achslastüberrollung über dem ausgezeichneten Streckenabschnitt. Die Computereinrichtung ist somit eingerichtet, entsprechende Anweisungen auszuführen. Somit kann eine zeitlich gemittelte Belastung und/oder zeitlich kumulierte Gesamtbelastung des ausgezeichneten Streckenabschnitts bestimmt werden. Auf diese Weise kann eine verlässliche wie präzise Analyse der Belastung des ausgezeichneten Streckenabschnitts ermöglicht sein.

Die Nutzlast kann sich auf eine einzelne Last auf dem ausgezeichneten Streckenabschnitt beziehen, die nicht dauernd auf ausgezeichneten Streckenabschnitt einwirkt. Insbesondere bezieht sich die Nutzlast auf die Belastung des ausgezeichneten Streckenabschnitts durch einzelne Transporte. Somit kann die Nutzlast zeitlich und/oder örtlich punktuell bestimmt sein.

Die Einwirkung kann gemäß den Lehren aus dem Bauingenieurwesen bestimmt sein. Insbesondere kann die Einwirkung eine Krafteinwirkung unter Berücksichtigung ihrer Richtung umfassen. Die Einwirkung kann eine über einen Zeitraum und/oder eine Fläche integrierte und/oder gemittelte Gesamtkräfteeinwirkung auf den ausgezeichneten Streckenabschnitt umfassen.

Die Achslastüberrollung kann gemäß der Fachsprache des Straßenbauwesens bestimmt sein. Die Achslastüberrollung kann insbesondere eine einzelne Überfahrt des ausgezeichneten Streckenabschnitts mit einer bekannten Achslast und/oder eine Gesamtheit von derartigen Überfahrten mit den jeweiligen Achslasten sein.

Gemäß einem Beispiel umfasst die Computereinrichtung ferner Mittel zum Auszeichnen eines weiteren Streckenabschnittes der von dem Transport zurückgelegten Strecke; und Mittel zum Bestimmen einer Belastung des weiteren Streckenabschnittes durch den Transport aufgrund der Transportdaten. Die Computereinrichtung kann eingerichtet sein, Anweisungen zum Auszeichnen eines weiteren Streckenabschnittes der von dem Transport zurückgelegten Strecke und zum Bestimmen einer Belastung des weiteren Streckenabschnittes durch den Transport aufgrund der Transportdaten auszuführen. Folglich können mehrere Streckenabschnitten einer Strecke, die durch den Transport zurückgelegt wird, bestimmt werden, und die jeweilige Belastung der mehreren Streckenabschnitte durch den Transport bestimmt werden. Beispielsweise können sämtliche Brückenbauwerke auf der Strecke ermittelt und deren Belastung durch den Transport bestimmt werden.

Die Bestimmung der Belastung der Streckenabschnitte über einen Zeitraum statistisch erfolgen, sodass präzise Informationen über eine Gesamtbelastung und/oder eine zeitlich gemittelte Belastung der Streckenabschnitte erhalten werden können.

Des Weiteren kann die Bestimmung der Belastung der Streckenabschnitte unabhängig von einer einzelnen Strecke, sondern bezogen auf ein definierbares Gebiet erfolgen. Beispielsweise kann die Belastung bestimmter Brückenbauwerke innerhalb der Bundesrepublik Deutschland, der EU oder eines beliebig wählbaren Gebietes in der vorstehend beschriebenen Weise bestimmt werden. Diese Informationen können wesentlich für die Gewährleistung der Sicherheit für den Straßenverkehr in dem betreffenden Gebiet sein.

Gemäß einem Beispiel kann die vorstehend beschriebene Bestimmung der Belastung des ausgezeichneten Streckenabschnitts in Verbindung mit dem vorstehend beschriebenen computerimplementierten Verfahren sowie dessen Ausführungsbeispielen realisiert sein. Insbesondere kann die Computereinrichtung ferner Mittel zum Bereitstellen einer Karte; Mittel zum Bestimmten eines Startpunkts und eines Zielpunkts für den Transport in der Karte; Mittel zum Ermitteln mindestens einer ersten Route von dem Startpunkt zu dem Zielpunkt in der Karte; Mittel zum Erfassen von dreidimensionalen Hindernisdaten auf der mindestens einen ersten Route; Mittel zum Erstellen einer zweiten Route basierend auf der mindestens einen ersten Route, den Transportdaten des Transportes und den dreidimensionalen Hindernisdaten; und Mittel zum Bestimmen der zweiten Route als die von dem Transport zurückzulegende Strecke umfassen. Auf diese Weise kann die Planung und Durchführung des Transports mit der Bestimmung der Belastung der Streckenabschnitte durch den Transport verknüpft werden. Dadurch kann der Organisations-, Verwaltungs- und Überwachungsaufwand für den Transport reduziert werden. Somit können die für den und bei dem Transport erforderlichen Ressourcen reduziert werden.

Ferner kann die vorstehend beschriebene Bestimmung der Belastung des ausgezeichneten Streckenabschnitts in Verbindung mit einem Navigationssystem erfolgen. Die durch den Transport zurückgelegte Strecke kann in einer Karte auf einer Anzeigevorrichtung visualisiert werden. Die Visualisierung kann auf Anzeigevorrichtung der Computereinrichtung und/oder einer separaten Computereinrichtung erfolgen. Beispielsweise können der eine oder die mehreren ausgezeichneten Streckenabschnitte auf der Karte zusammen mit der zurückgelegten Strecke und/oder wahlweise unabhängig davon angezeigt werden. Die Computereinrichtung kann eingerichtet sein, ein Auswählen des einzelnen ausgezeichneten Streckenabschnitts zu ermöglichen und Informationen über die Belastung des ausgewählten ausgezeichneten Streckenabschnitts anzuzeigen.

Ein weiterer Aspekt betrifft ein verteiltes Computersystem, das mindestens eine Client-Vorrichtung und mindestens eine Server-Vorrichtung umfasst, die kommunikativ miteinander gekoppelt sind. Die mindestens eine Client-Vorrichtung und/oder die mindestens eine Server-Vorrichtung umfasst die vorstehend beschrieben Computereinrichtung oder ein beliebiges Ausführungsbeispiel hiervon.

Gemäß einem Beispiel umfasst das Verfahren ferner Speichern der Transportdaten und der bei dem Transport zurückgelegten Strecke.

Gemäß einem Beispiel umfasst das Verfahren ferner Übermitteln der Transportdaten und der durch den Transport zurückgelegten Strecke an eine separate Computereinrichtung.

Gemäß einem Beispiel umfasst das Verfahren ferner Erfassen mindestens eines weiteren Transportes, der innerhalb eines vorbestimmten Zeitraums den ausgezeichneten Streckenabschnitt befährt; Erfassen von Transportdaten des mindestens einen weiteren Transports, die ein Gesamtgewicht und/oder eine Achslast des jeweiligen weiteren Transports umfassen; und Bestimmen der Belastung des ausgezeichneten Streckenabschnittes zusätzlich durch den weiteren Transport aufgrund der zugehörigen Transportdaten.

Gemäß einem Beispiel des Verfahrens umfassen die Transportdaten zusätzlich mindestens eines der Folgenden: eine Geschwindigkeit des Transportes während des Befahrens des ausgezeichneten Streckenabschnitts; eine Breite des Transportes; eine Reifenaufstandsfläche des Transportes; eine Achsenzahl des Transportes; und einen Achsenabstand des Transportes.

Gemäß einem Beispiel umfasst das Verfahren ferner Erfassen eines Lastenbildes des Transportes beim Befahren des ausgezeichneten Streckenabschnitts.

Gemäß einem Beispiel umfasst das Verfahren ferner Bestimmen der Belastung des ausgezeichneten Streckenabschnitts entlang und/oder quer zu einer befahrenden Richtung.

Gemäß einem Beispiel des Verfahrens ist der ausgezeichnete Streckenabschnitt ein Brückenbauwerk, und das Verfahren umfasst ferner Bestimmen der Belastung des ausgezeichneten Streckenabschnitts unter Berücksichtigung von Schnittgrößen des Brückenbauwerks.

Gemäß einem Beispiel umfasst das Verfahren ferner Bestimmen der Belastung des ausgezeichneten Streckenabschnitts durch den Transport unter Berücksichtigung von Brückendaten. Die Brückendaten umfassen mindestens eines der Folgenden: ein Trägertyp des Brückenbauwerks; eine Breite des Brückenbauwerks; und eine Geometrie des Brückenbauwerks.

Gemäß einem Beispiel umfasst das Verfahren ferner Bestimmen der Belastung des ausgezeichneten Streckenabschnitts unter Berücksichtigung einer Verkehrssituation während des Befahrens des ausgezeichneten Streckenabschnitts durch den Transport.

Gemäß einem Beispiel umfasst das Verfahren ferner statistisches Erfassen mindestens eines der Folgenden über einen vorbestimmten Zeitraum: eine Nutzlast auf dem ausgezeichneten Streckenabschnitt; eine Einwirkung auf den ausgezeichneten Streckenabschnitt; und eine Achslastüberrollung über dem ausgezeichneten Streckenabschnitt.

Gemäß einem Beispiel umfasst das Verfahren ferner Auszeichnen eines weiteren Streckenabschnittes der durch den Transport zurückgelegten Strecke; und Bestimmen einer Belastung des weiteren Streckenabschnittes durch den Transport aufgrund der Transportdaten.

Gemäß einem Beispiel des Verfahrens umfasst der Transport eine Zugmaschine und ein Transportgut, dessen Transport ein Schwertransport und/oder Großraumtransport ist.

Gemäß einem Beispiel umfasst das Verfahren ferner Bereitstellen einer Karte; Bestimmten eines Startpunkts und eines Zielpunkts für den Transport in der Karte; Ermitteln mindestens einer ersten Route von dem Startpunkt zu dem Zielpunkt in der Karte; Erfassen von dreidimensionalen Hindernisdaten auf der mindestens einen ersten Route; und Erstellen einer zweiten Route basierend auf der mindestens einen ersten Route, den Transportdaten des Transportes und den dreidimensionalen Hindernisdaten; und Bestimmen der zweiten Route als die durch den Transport zurückzulegende Strecke.

Das hierin beschriebene Verfahren sowie dessen Ausführungsbeispiele können auf das Navigationssystem, die Computereinrichtung, das verteiltes Computersystem und/oder deren Ausführungsbeispiele anwendbar oder durch sie ausführbar sein.

Ferner offenbart ist ein Verfahren zum Durchführen eines Transportes, wobei der Transport die oben beschriebenen Transportdaten aufweist. Der Transport wird entlang der zweiten Route geführt, die wie vorstehend beschriebenen erstellt wird.

Demgemäß können die oben beschriebenen technischen Effekte und/oder Vorteile teilweise oder gänzlich in dem Navigationssystem oder dem verteilten Computersystem entsprechend realisiert sein.

Weitere Effekte und Vorteile werden nachfolgend anhand der Zeichnungen näher erläutert.

### Kurze Beschreibung der Zeichnungen

- Fig. 1: zeigt ein Blockdiagramm eines Verfahrens nach einem Beispiel;
- Fig.2: zeigt eine schematische Ansicht eines Transportfahrzeugs mit Transportgut nach einem Beispiel;
- Fig. 3: zeigt eine schematische Ansicht einer Karte nach einem Beispiel;
- Fig. 4: zeigt eine schematische Abbildung einer Teilstrecke einer ersten Route nach einem Beispiel;
- Fig. 5: zeigt eine schematische Abbildung einer Teilstrecke einer ersten Route nach einem weiteren Beispiel;
- Fig. 6: zeigt eine schematische Abbildung einer Computereinrichtung nach einem Beispiel;
- Fig. 7: zeigt ein Ablaufdiagramm eines Verfahrens nach einem Beispiel;
- Fig. 8: zeigt eine schematische Abbildung eines verteilten Computersystems nach einem Beispiel;
- Fig. 9: zeigt eine grafische Darstellung von Strecken nach einem Beispiel;
- Fig. 10: zeigt eine schematische Darstellung eines Querschnitts eines Brückenbauwerks nach einem Beispiel;
- Fig. 11: zeigt eine schematische Darstellung eines Satelliten- oder Luftbildes eines gekrümmten Streckenabschnitts nach einem Beispiel;
- Fig. 12: zeigt eine schematische Darstellung einer dreidimensionalen Abbildung einer Umgebung des gekrümmten Streckenabschnitts nach dem Beispiel der Fig. 11;
- Fig. 13: veranschaulicht die Bestimmung einer Schleppkurve nach einem Beispiel; und
- Fig. 14: zeigt eine schematische Darstellung der Bestimmung einer Schleppkurve beim Durchfahren des gekrümmten Streckenabschnitts nach dem Beispiel der Fig. 11-13.

### Detaillierte Beschreibung der Zeichnungen

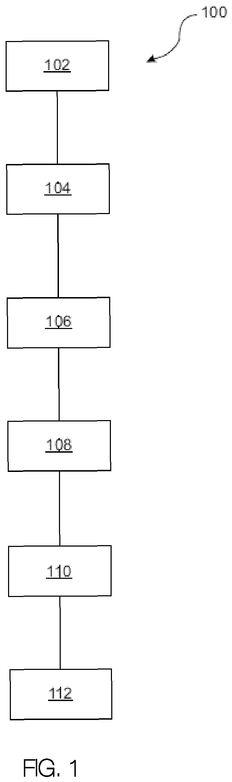

Fig. 1 zeigt ein Blockdiagramm, das schematisch ein Beispiel eines computerimplementierten Verfahrens 100 darstellt. Jeder der unten erläuterten Verfahrensschritte 102 bis 112 sowie dabei genannten strukturellen und funktionalen Merkmale können zumindest teilweise wie oben beschrieben ausgestaltet sein. Einige Details werden nachfolgend anhand von konkreten Beispielen näher erläutert. Das computerimplementierte Verfahren kann auf einer der vorstehend beschriebenen Computereinrichtung ausführbar sein. Das computerimplementierte Verfahren kann in Kombination mit dem vorstehend beschriebenen Verfahren ausgeführt werden.

Bei 102 wird eine Karte bereitgestellt. Diese Karte kann eine digitale Karte sein und online und/oder offline zur Verfügung gestellt sein. Die Karte beinhaltet topografische Informationen und gibt diese grafisch wieder. Insbesondere sind in der Karte die für den Transport nötigen Strecken aufgezeichnet und die für die Orientierung nötigen Informationen enthalten.

Bei 104 werden ein Startpunkt und ein Zielpunkt des Transportes in der Karte bestimmt. Der Start- und Zielpunkt kann über eine Schnittstelle mittels geeigneter Eingabegeräte wie z.B. Touchscreen, Tastatur und Maus von einem Benutzer eingegeben werden. Weiterhin können der Startpunkt und der Zielpunkt von einem Netzwerk, einem Server oder einer Cloud heruntergeladen werden. Ferner können der Start- und der Zielpunkt als eine definierte Datenstruktur in einem vorgegebenen Datenformat eingelesen werden. Das computerimplementierte Verfahren 100 kann imstande sein, all diese Eingabemöglichkeiten zur Verfügung zu stellen.

Bei 106 werden Transportdaten erfasst. Die Transportdaten können die physische Beschaffenheit des Transportfahrzeugs und/oder des Transportguts betreffen. Beispielsweise umfassen die Transportdaten die Abmessungen und das Gewicht des Transportfahrzeugs samt Transportgut sowie Informationen über die Kurvenverhalten, wie z.B. den Wendekreis des Transportfahrzeugs im und gegen den Uhrzeigersinn.

Das Erfassen des Start- und Zielpunkts sowie das Erfassen der Transportdaten können nacheinander oder gleichzeitig erfolgen. In manchen Beispielen werden die Transportdaten erfasst, bevor der Start- und der Zielpunkt in der Karte erfasst werden.

Bei 108 wird mindestens eine erste Route von dem Startpunkt zu dem Zielpunkt ermittelt. Insbesondere können mehrere erste Routen ermittelt werden. Die ersten Routen können rechnerisch möglichen topografischen Verbindungen zwischen dem Start- und Zielpunkt, mit oder ohne Berücksichtigung der Fahrtrichtung, gemäß der digitalen Karte und den darin enthaltenen Informationen entsprechen.

Bei 110 werden dreidimensionale Hindernisdaten auf der mindestens einen ersten Route erfasst. Insbesondere werden sämtliche dreidimensionale Hindernisdaten auf jeder der mehreren ersten Routen erfasst. Alternativ können die dreidimensionalen Hindernisdaten nur für ausgewählte erste Routen erfasst werden. Die dreidimensionalen Hindernisdaten beinhalten insbesondere Informationen über die räumliche Beschaffenheit der Umgebung entlang der jeweiligen ersten Route. Zu diesem Zweck können eine oder mehrere mobile Erfassungseinheiten die ersten Routen durchfahren und eine Abbildung der Umgebung der jewiliegen ersten Route erstellen. Beispielsweise erstellen die mobilen Erfassungseinheiten die Abbildung der Umgebung mithilfe einer optischen und/oder elektromagnetischen Abstandserfassung. Die dreidimensionalen Hindernisdaten können aus der Abbildung den Umgebungen der ersten Routen erhalten werden.

Bei 112 wird eine zweite Route basierend auf der mindestens einen Route, den Transportdaten und den dreidimensionalen Hindernisdaten erstellt. Insbesondere wird für einzelne erste Route überprüft, ob die Transportdaten mit den dreidimensionalen Hindernisdaten der jeweiligen ersten Route vereinbar sind. Die Transportdaten und die dreidimensionalen Hindernisdaten einer ausgewählten ersten Route kann beispielsweise miteinander vereinbar sein, wenn zu erwarten ist, dass das Transportfahrzeug inklusive des Transportguts auf der gesamten ersten Route einen vorgegebenen Mindestabstand zu der räumlichen Umgebung hält.

Somit kann die Planung der Route teilweise oder vollständig automatisiert erfolgen. Mit der Abbildung der Umgebung der ersten Routen werden detaillierte Informationen über mögliche Hindernisse für den Transport bereitgestellt. Es kann zudem eine Schnittstelle geschaffen werden, die die erstellte zweite Route direkt mit einer Behörde kommuniziert, die für die Genehmigungserteilung von Transporten zuständig ist. Dadurch und dank der zuverlässigen und präzisen Planung kann nebst oben diskutierten Effekten und Vorteilen der Genehmigungsprozess eines Transportes wesentlich erleichtert werden.

In Beispielen, die in Fig. 1 nicht gezeigt sind, können weitere Verfahrensschritte hinzukommen. Beispielsweise kann die Überprüfung, ob die dreidimensionalen Hindernisdaten mit den Transportdaten vereinbar ist, zunächst ergeben, dass eine Durchfahrt der ausgewählten ersten Route, oder einer Teilstrecke hiervon, möglich oder unmöglich ist. Falls die Durchfahrt der ersten Route möglich ist, kann die Überprüfung ergeben: Durchfahrt der ersten Route ohne Anweisungen, oder Durchfahrt zumindest einer oder einiger Teilstrecken der ersten Route gemäß zugehörigen Anweisungen.

Falls Anweisungen für die Durchfahrt einer ersten Route vorhanden sind, können zudem Hindernispositionen bestimmt werden, die zu den dreidimensionalen Hindernisdaten zugehörig sind. Die Hindernispositionen können insbesondere in der Karte bestimmt sein und topografische Informationen umfassen. Die Hindernispositionen können in einer Speichervorrichtung gespeichert sein. Des Weiteren wird die momentane Position des Transportfahrzeugs mithilfe einer GPS-Positionsbestimmung erfasst. Das Transportfahrzeug weist die Transportdaten auf und kann auf der zweiten Route zwischen dem Start- und dem Zielpunkt in Richtung des Zielpunkts unterwegs sein. Ferner wird eine nächste Hindernisposition aus den Hindernispositionen ermittelt, die der Position des Transportfahrzeugs am nächsten ist. Falls zu der nächsten Hindernisposition, für deren Durchfahrt Anweisungen vorgesehen sind, wird eines der Folgenden bereitgestellt: die nächste Hindernisposition; die dreidimensionalen Hindernisdaten, welchen die nächste Hindernisposition zugehörig ist; und Anweisungen für die Durchfahrt der dreidimensionalen Hindernisdaten, welchen die nächste Hindernisposition zugehörig ist. Dabei wird der Hinweis auf mindestens einer Ausgabevorrichtung in dem Transportfahrzeug und/oder auf einer Ausgabevorrichtung in einem Begleitfahrzeug bereitgestellt.

Der bereitgestellte Hinweis kann auf einer Anzeigeeinrichtung, z.B. auf einem Tablet, einem Smartphone, einem Laptop-Rechner oder sonstigen mobilen Anzeigeeinrichtungen optisch angezeigt werden. Zusätzlich oder alternativ kann eine akustische Wiedergabe des bereitgestellten Hinweises, beispielsweise über ein Lautsprechersystem, erfolgen.

Des Weiteren kann der Hinweis in unterschiedlichen Sprachen bereitgestellt werden. Beispielsweise kann das computerimplementierte Verfahren vorsehen, dass die Sprache, in welcher der Hinweis bereitgestellt wird, voreinstellbar oder jederzeit umstellbar ist. Der Hinweis kann vorzugsweise in einer Sprache bereitgestellt werden, die der Fahrzeugführer versteht.

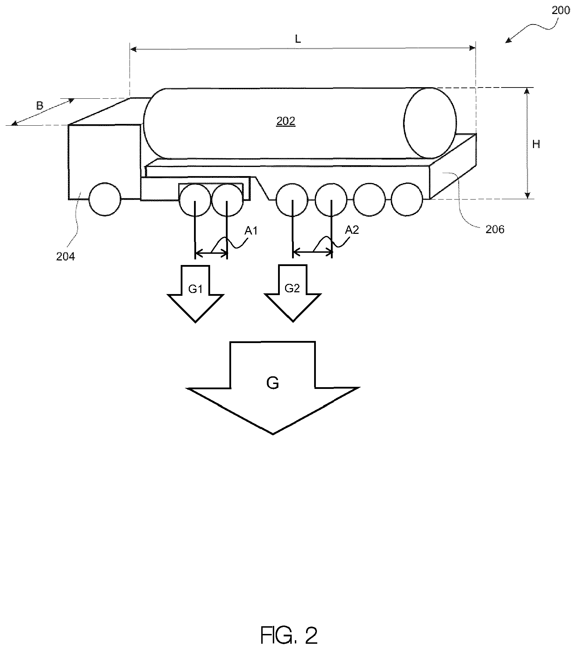

Fig. 2 zeigt eine schematische Ansicht eines Transportfahrzeugs 200 mit Transportgut 202. Das Transportfahrzeug 200 kann ein Großraumtransportfahrzeug, ein Schwertransportfahrzeug und/oder ein Ausnahmetransportfahrzeug sein. Insbesondere kann das Transportfahrzeug 200 ein mehrachsiges Fahrzeug mit mehr als 4 Achsen sein. Wie beispielsweise in Fig. 2 gezeigt, kann das Fahrzeug 200 mindestens zweiteilig ausgebildet sein und zumindest eine Sattelzugmaschine 204 und einen Sattelauflieger 206 umfassen. Je nach Größe und Art des Transportguts 202 kann der Sattelauflieger ein- oder mehrteilig ausgebildet sein. Je nach Größe und Art des Transportguts 202 und/oder der Sattelzugmaschine 204 kann der Sattelauflieger 206 auf einem hinteren Teil der Sattelzugmaschine 204 aufliegen, wie in Fig. 2 gezeigt, oder über das Transportgut 202 mit der Sattelzugmaschine 204 gekoppelt sein.

Alternativ kann das Transportfahrzeug 200 einen Lastkraftwagen 204 und einen Anhänger 206 umfassen. In Beispielen, die in Fig. 2 nicht gezeigt sind, kann das Transportfahrzeug 200 ein überdimensioniertes Fahrzeug mit oder ohne Ladegut umfassen, z.B. einen Autokran oder eine sonstige selbstfahrende Arbeitsmaschine.

Das Transportgut 202 weist ein Gewicht und räumliche Ausdehnungen wie Höhe, Breite und Länge auf. Das Transportfahrzeug 200 kann insgesamt so ausgestaltet sein, den Transport des Transportguts 202 von dem Startpunkt zu dem Zielpunkt zu gewährleisten. Insbesondere kann der Sattelauflieger 206 so ausgestaltet sein, das Transportgut 202 ausreichend zu stützen und zu sichern. Beispielsweise weist der Sattelauflieger 206 eine hinreichende Länge, eine hinreichende Breite und ein hinreichendes zulässiges Lastgewicht auf. Die Sattelzugmaschine 204 kann eine Arbeitsmaschine, z.B. einen Motor, umfassen, die die Leistung zum Befördern des Transportguts 202, des Sattelaufliegers 206 sowie der Sattelzugmaschine 204 aufbringt. Zusätzlich kann die Sattelzugmaschine 204 ein Führerhaus umfassen, das einen Fahrzeugführer aufnehmen kann.

Insgesamt weist das Transportfahrzeug 200 zusammen mit dem Transportgut 202 eine Gesamtlänge L, eine Gesamthöhe H und eine Gesamtbreite B auf. Das Gesamtgewicht G umfasst mindestens die Gewichte des Transportguts 202, der Sattelzugmaschine 204 und des Sattelaufliegers 206. Zu dem Gesamtgewicht hinzu kommen gegebenenfalls Zusatzgewichte umfassend das Gewicht des Fahrzeugführers und die Gewichte möglicher weiterer Begleitpersonen im Transportfahrzeug 200, das Gewicht von Kraftstoff und/oder das Gewicht weiterer Lasten, mit welchen das Transportfahrzeug 200 beladen sein kann. In manchen Beispielen können die Zusatzgewichte vernachlässigbar sein.

Die Abmessungen L, B und T sowie das Gesamtgewicht G können als Teil der Transportdaten erfasst werden. Ferner können weitere technischen Daten wie die Kurvenverhalten des Transportfahrzeugs 200 samt Transportgut 202, z.B. der Wendekreis des Transportfahrzeugs 200 jeweils nach links und nach rechts, Teil der Transportdaten sein.

Zu den Transportdaten zählen zudem Achslasten G1, G2 zu jeder der Achsen des Sattelzugmaschine 204 sowie des Sattelaufliegers 206. In Fig. 2 sind aus Übersichtsgründen nur zwei Achslasten G1 und G2 veranschaulicht. Es versteht sich, dass für jede Achse des Sattelzugmaschine 204 und des Sattelaufliegers 206 eine jeweilige Achslast erfasst wird.

Ferner werden die Achsenabstände A1, A2 erfasst. Aus Übersichtsgründen sind lediglich zwei Achsenabstände A1 und A2 in Fig. 2 veranschaulicht. Es versteht sich, dass ein Achsenabstand zwischen zwei beliebigen benachbarten Achsen des Sattelzugmaschine 204 und des Sattelaufliegers 206 bestimmt werden kann.

Ferner können eine Reifenaufstandsfläche, eine Spurweite (nicht explizit gezeigt in Fig. 2) und eine Achsenzahl zu den Transportdaten gehören. Des Weiteren können die Transportdaten eine Bereifung und/oder deren Eigenschaften umfassen. Demnach können die Transportdaten beispielsweise eine Anzahl der Reifen pro Achse, eine Materialzusammensetzung von einzelnen Reifen des Transportes, gegebenenfalls unterschiedliche Bereifung der einzelnen Reifen des Transportes oder dergleichen umfassen.

Die Transportdaten können ferner einen Reibungskoeffizienten und/oder einen Reibungswiderstand des Transportes umfassen. Der Reibungskoeffizienten und/oder der Reibungswiderstand können mit der Bereifung zusammenhängen. Der Reibungskoeffizienten und/oder der Reibungswiderstand können relativ zu einer Straßenoberfläche bestimmt sein. Insbesondere können die Transportdaten den Reibungskoeffizienten und/oder den Reibungswiderstand in Abhängigkeit von verschiedenen Straßenoberflächentypen erfassen, die Unterschiede in Griffigkeit aufweisen können. Beispielsweise umfasst der Straßenoberflächentyp Asphalt, Beton oder ein sonstiges Gemisch. Der Reibungskoeffizienten und/oder der Reibungswiderstand des Transportes können einen Einfluss auf den Wendekreis des Transportes haben und umgekehrt.

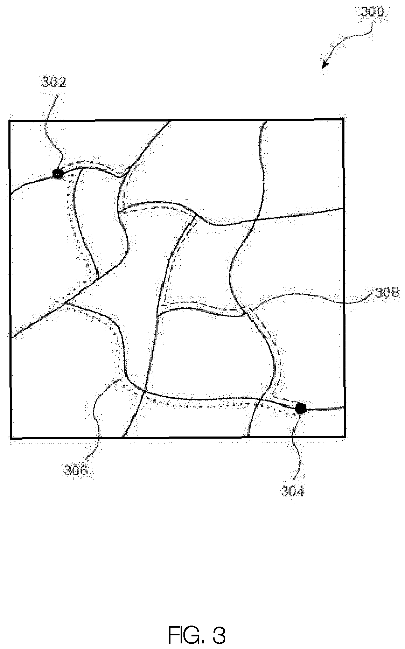

Fig. 3 zeigt eine schematische Ansicht einer Karte 300. Die Karte 300 ist beispielsweise eine digitale Karte, die online und/oder offline zur Verfügung gestellt werden kann. In der Karte 300 bestimmt sind ein Startpunkt 302 und ein Zielpunkt 304. Es ergeben sich mehrere topografische Verbindungen zwischen dem Startpunkt 302 und dem Zielpunkt 304, wovon in Fig. 3 zwei Beispiele 306, 308 veranschaulichend markiert sind. Diese können zwei erste Routen zwischen dem Startpunkt 302 und dem Zielpunkt 304 sein.

Räumliche Beschaffenheit an bestimmten Positionen, die jeweils ein potentielles Hindernis für den Transport mit den gegebenen Transportdaten darstellt, kann bei der Ermittlung der ersten Routen bereits bekannt oder unbekannt sein. Eine oder mehrere mobile Erfassungseinheiten, oder mobile mapping systems, können die ersten Routen durchfahren um präzise, dreidimensionale Hindernisdaten zu erfassen.

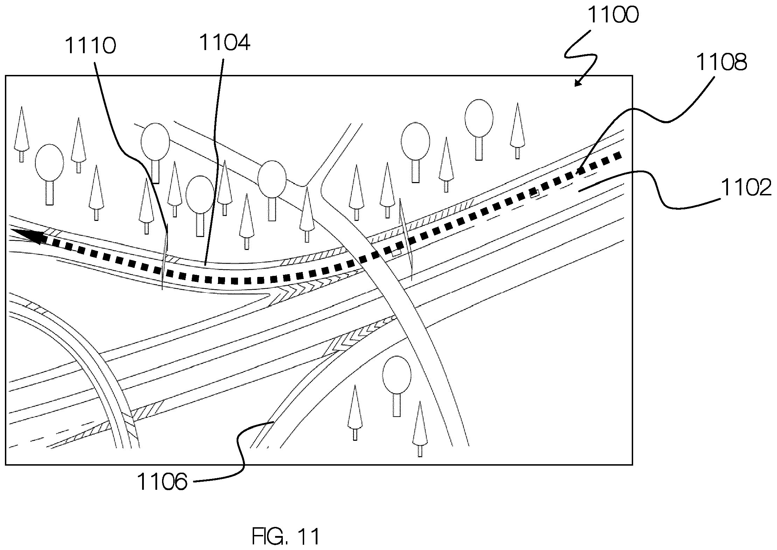

Fig. 11 zeigt schematisch ein Satellitenbild eines Streckenabschnitts 1100. In dem Beispiel der Fig. 11 ist der Streckenabschnitt 1100 ist eine Anschlussstelle an eine Autobahn mit einem geraden Autobahnabschnitt ("Autobahn") 1102 in beide Verkehrsrichtungen, einer Autobahnausfahrt 1104 und einer Autobahneinfahrt 1106. In dem Beispiel der Fig. 11 verläuft eine erste Route 1108 auf der Autobahn 1102 bis zu der Autobahnausfahrt 1104 und verlässt die Autobahn 1102 über die Autobahnausfahrt 1104.

Folglich entspricht in diesem Beispiel die Autobahnausfahrt 1104 einem gekrümmten Streckenabschnitt der ersten Route 1108. Um die Durchfahrbarkeit und ein erforderliches Manöver für die Durchfahrt der Autobahnausfahrt 1104 zu bestimmen, wird eine mobile Erfassungseinheit (nicht gezeigt) eingesetzt, die entlang der ersten Route 1108 fährt und während der Fahrt eine dreidimensionale Abbildung von Umgebungen der ersten Route 1108 erstellt und/oder eine Abstandsmessung durchführt.

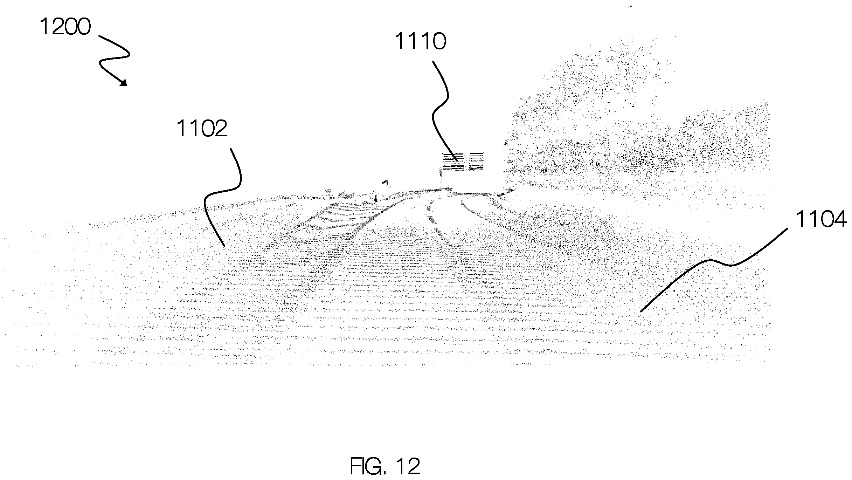

Fig. 12 zeigt schematisch eine dreidimensionale Abbildung 1200 einer Umgebung der Autobahnausfahrt 1104 gemäß dem Beispiel der Fig. 11. Insbesondere führt die mobile Erfassungseinheit eine Abstandsmessung mittels LiDAR durch und erstellt eine Punktwolke wie in Fig. 12. Basierend auf diesen Daten können die dreidimensionalen Hindernisdaten in diesem Streckenabschnitt sowie weitere Parameter für die Durchfahrt der Autobahnausfahrt 1104 bestimmt werden. Beispielsweise können die gemessenen und berechneten Daten zugrunde gelegt werden für die Bestimmung einer Steigung, einer Breite und/oder eines Krümmungsradius des Streckenabschnitts.

Ferner können die gemessenen und berechneten Daten verwendet werden, um eine strukturelles Hindernis zu erkennen und eine Kollision vorzubeugen. Wie in Fig. 11 und 12 gezeigt befindet sich ein Verkehrsschild 1110 über der Autobahnausfahrt 1104. Mithilfe der Abstandsmessung und/oder der dreidimensionalen Abbildung der Umgebungen kann ein derartiges dreidimensionales Hindernis präzise erkannt und eine Kollisionsgefahr des geplanten Transportes mit dem dreidimensionalen Hindernis ausgewertet werden. Somit kann die Durchfahrbarkeit des gekrümmten Streckenabschnitts zuverlässig bestimmt und ein erforderliches Manöver für die Durchfahrt präzise ermittelt werden. Dadurch kann die Sicherheit bei dem und für den Transport erhöht werden.

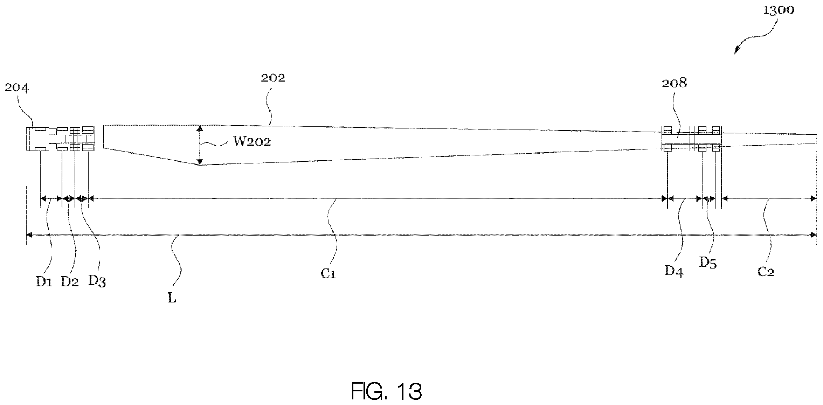

In Fig. 13 gezeigt ist ein Beispiel für einen Transport 1300. Der Transport 1300 umfasst insbesondere eine Zugmaschine 204 und einen Nachläufer 208, die ein Transportgut 202 transportieren sollen. In dem Beispiel der Fig. 13 kann das Transportgut eine Laufschaufel für eine Windturbine mit einer maximalen Breite W202 sein. Zusätzlich zu den oben mit Bezug auf Fig. 2 beschriebenen Transportdaten sowie der maximalen Breite W202 des Transportgutes 202 und der Gesamtlänge L weist der Transport 1300 weitere Transportdaten auf, die eine Anzahl der Achsen, Art der einzelnen Achsen (d.h. lenkbar oder fixiert), die einzelnen Abstände D1-D5 zwischen den benachbarten Achsen, eine Entfernung C1 zwischen der Zugmaschine 204 und dem Nachläufer 208, und eine Überlänge C2 nach hinten umfassen. Es versteht sich, dass noch weitere Parameter für den Transport 1300 relevant sein können.

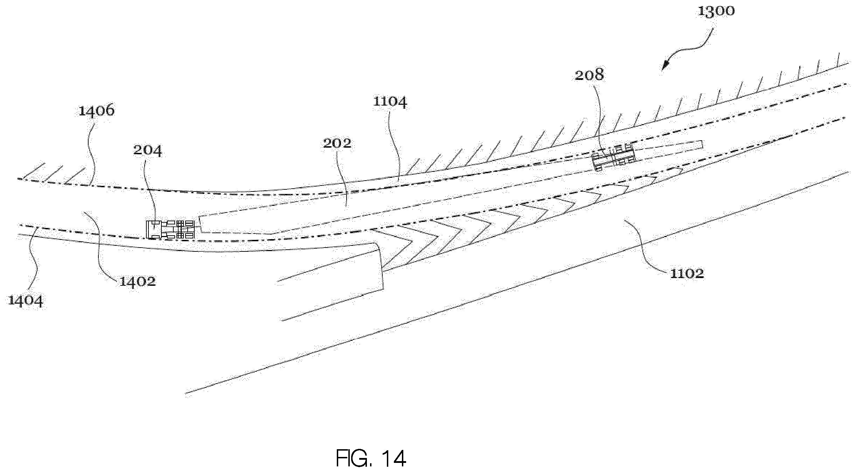

Wie in Fig. 14 schematisch gezeigt können die genannten Transportdaten verwendet werden, um die Durchfahrt des Transportes 1300 durch die Autobahnausfahrt 1104, d.h. durch den gekrümmten Streckenabschnitt, rechnerisch nachzubilden. Auf der Basis der Berechnung kann bestimmt werden, ob die Durchfahrt ausführbar ist. Ferner kann eine optimierte Route und/oder ein erforderliches Manöver für die Durchfahrt des gekrümmten Streckenabschnitts bzw. der Autobahnausfahrt 1104 ermittelt werden. Des Weiteren kann eine Schleppkurve 1402 für die Durchfahrt des gekrümmten Streckenabschnitts 1104 auf der Basis der Transportdaten bestimmt werden. Hierbei kann das Fahrverhalten des Transportes 1300, insbesondere das Ausschwenken des Transportguts 202, bei der Durchfahrt der Autobahnausfahrt 1104 nachgebildet werden, um maximale seitliche bzw. radiale Auslenkungen 1404, 1406 des Transportes 1300 zu bestimmen. Beispielsweise kann die Schleppkurve 1402 als die Fläche bzw. das Volumen zwischen den maximalen Auslenkungen 1404, 1406 bestimmt werden.

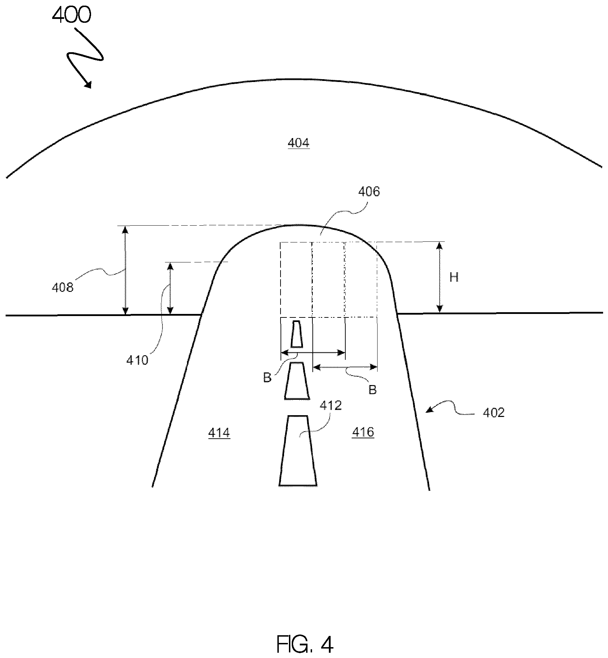

Fig. 4 zeigt eine schematische Abbildung 400 einer Teilstrecke 402 einer ersten Route nach einem Beispiel. Die Teilstrecke 402 verläuft durch eine Öffnung 406 eines Bauwerks 404 hindurch, das eine Brücke, eine Überführung, ein Tunnel oder dergleichen sein kann. Die Öffnung 406 weist einen halbkreis-ähnlichen Querschnitt auf mit einer maximalen Höhe 408 in der Mitte und einer verminderten Höhe 410 in den Randbereichen der Öffnung 406. Gestrichelte Streifen 412 kennzeichnen die Mittellinie der Straße der Teilstrecke 402 und teilen diese in eine linke Spur 414 und eine rechte Spur 416.

Für ein Transportfahrzeug mit einer Breite B ist eine Durchfahrt des Bauwerks 404 auf der rechten Spur 416 nicht möglich, da sonst das Transportfahrzeug, oder das Transportgut, mit dem Bauwerk 404 in Berührung kommen würde, was eine Beschädigung des Transportfahrzeugs, des Transportguts, des Bauwerks 404 und/oder Dritter zur Folge haben kann. Deshalb können Anweisungen für den Transport vorsehen, dass das Bauwerk 404 in der Mitte durchzufahren ist. Die Beschaffenheit der Öffnung 406 des Bauwerks 404 kann mithilfe der oben diskutierten mobilen Erfassungsfahrzeuge präzise erfasst werden und als dreidimensionale Hindernisdaten zur Verfügung gestellt werden. Die Transportdaten umfassen insbesondere die Breite B und die Höhe H des Transportfahrzeugs samt Transportgut, um zu bestimmen, dass die Durchfahrt des Bauwerks 404 nicht möglich, ohne Anweisungen möglich oder mit welchen Anweisungen möglich ist.

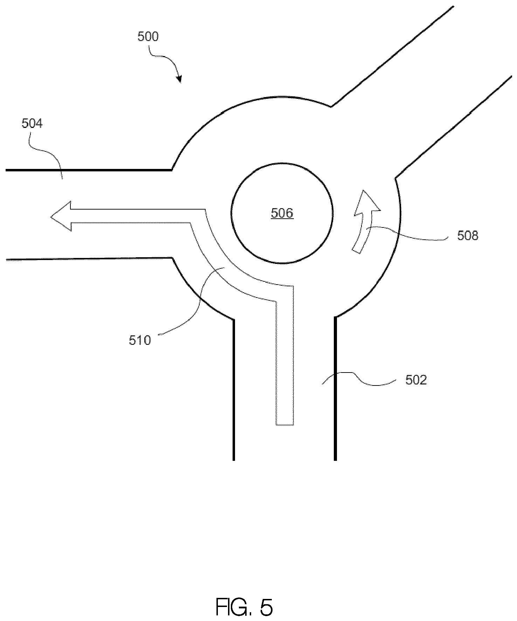

Fig. 5 zeigt eine schematische Abbildung 500 einer Teilstrecke einer ersten Route nach einem weiteren Beispiel. Die Teilstrecke führt, in der Orientierung der Fig. 5, von einer unteren Straße 502 kommend auf eine nach links führende Straße 504. Die untere Straße 502 und die nach links führende Straße 504 sind über einen Kreisverkehrsplatz mit einer Mittelinsel 506 miteinander verbunden. In manchen Ländern ist ein derartiger Kreisverkehrsplatz gegen den Uhrzeigersinn zu befahren, wie durch den Pfeil 508 gekennzeichnet. Das computerimplementierte Verfahren kann basierend auf den dreidimensionalen Hindernisdaten zu dem Kreisverkehrsplatz ergeben, dass aufgrund der Größe des Wendekreises des Transportfahrzeugs erforderlich ist, den Kreisverkehrsplatz im Uhrzeigersinn zu befahren, wie durch den Pfeil 510 gekennzeichnet. Es werden entsprechende Anweisungen sowie der entsprechende Hinweis zur Anzeige und/oder Ausgabe bereitgestellt.

Das computerimplementierte Verfahren kann vorsehen, dass ein Hinweis mit den Anweisungen angezeigt und/oder ausgegeben wird, sobald sich das Transportfahrzeug dem jeweiligen Hindernis, das z.B. durch ein Bauwerk, eine Kreuzung, einen Kreisverkehr, eine Baustelle, eine landschaftliche oder bauliche Beschaffenheit oder dergleichen gegeben sein kann, bis auf eine vorgegebene Distanz nähert. Die vorgegebene Distanz kann je nach Art des Hindernisses sowie je nach Art der Anweisungen variieren. Beispielsweise beträgt die vorgegebene Distanz 1 Meter bis 10 Kilometer, oder 100 Meter bis 10 Kilometer. Beispielsweise kann der Hinweis in regelmäßigen Abständen wiederholt angezeigt und/oder ausgegeben werden.

Ferner können ein oder mehrere Begleitfahrzeuge für den Transport vorgesehen sein. In solchen Fällen kann der Hinweis zeitgleich über ein verteiltes Computersystem bei dem Transportfahrzeug und dem jeweiligen Begleitfahrzeug angezeigt und/oder ausgegeben werden. Für diesen Zweck kann vorgesehen sein, dass ein oder mehrere Begleitfahrzeuge kommunikativ mit dem Transportfahrzeug gekoppelt sind. Es kann ein entsprechendes Kommunikationsnetzwerk zwischen den Begleitfahrzeugen und dem Transportfahrzeug bereitgestellt sein.

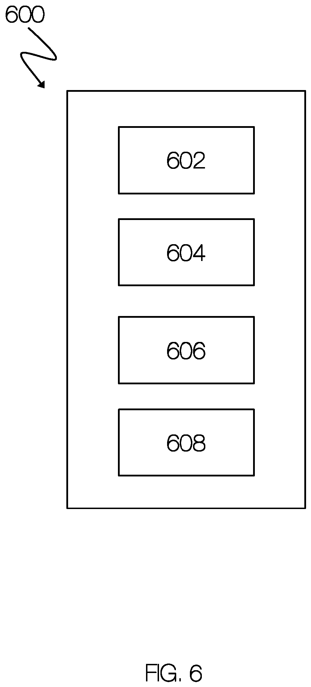

Fig. 6 zeigt ein Beispiel einer Computereinrichtung 600. Die Computereinrichtung 600 umfasst mindestens Mittel 602 zum Erfassen der vorgenannten Transportdaten, die insbesondere das Gesamtgewicht G und die Achslasten G1, G2 des Transports umfassen. Die Computereinrichtung 600 umfasst ferner Mittel 604 zum Erfassen einer durch den Transport zurückgelegten Strecke, Mittel 606 zum Auszeichnen eines Streckenabschnittes der durch den Transport zurückgelegten Strecke und Mittel 608 zum Bestimmen einer Belastung des ausgezeichneten Streckenabschnittes durch den Transport aufgrund der Transportdaten. Die Mittel 602, 604, 606 und 608 können jeweils von einer Prozessoreinheit gegebenenfalls unter Zuhilfenahme einer Speichereinheit (nicht gezeigt in Fig. 6) der Computereinrichtung 600 realisiert sein.

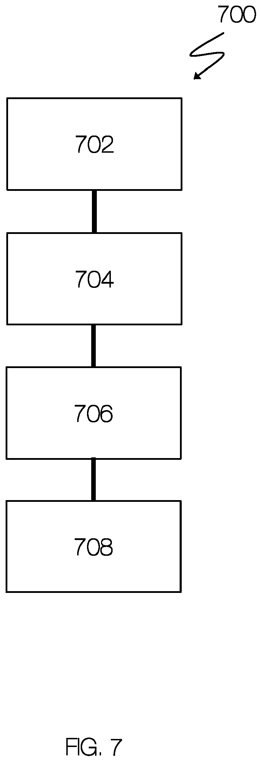

Fig. 7 zeigt ein Beispiel eines Verfahrens 700. Bei 702 werden die vorgenannten Transportdaten erfasst, die insbesondere das Gesamtgewicht G und die Achslasten G1, G2 des Transports umfassen. Bei 704 wird die durch den Transport zurückgelegte Strecke erfasst. Bei 706 wird Streckenabschnitt der durch den Transport zurückgelegten Strecke ausgezeichnet. Bei 708 wird eine Belastung des ausgezeichneten Streckenabschnittes durch den Transport aufgrund der Transportdaten bestimmt. Das Verfahren 700 kann durch die Computereinrichtung 600 ausführbar sein. Das Verfahren 700 mit dem vorstehend beschriebenen computerimplementierten Verfahren oder mit dessen Ausführungsbeispielen kombiniert werden.

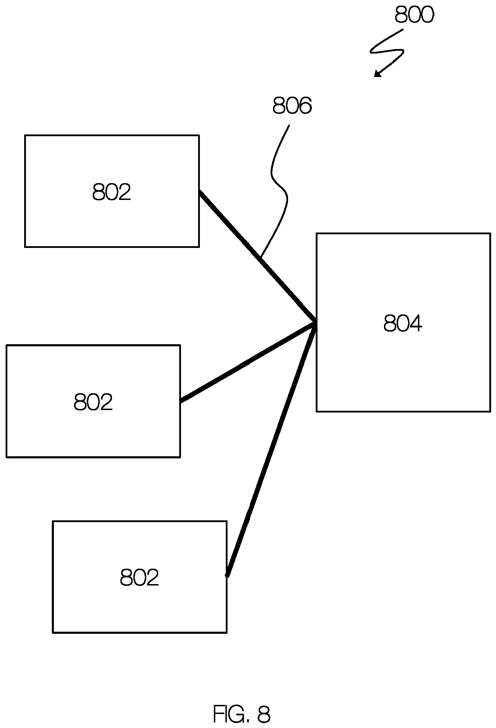

Fig. 8 zeigt ein Beispiel eines verteilten Computersystems 800. Das System 800 umfasst mindestens eine Client-Vorrichtung 802 und mindestens eine Server-Vorrichtung 804. Die mindestens eine Client-Vorrichtung 802 und die mindestens eine Server-Vorrichtung 804 sind kommunikativ miteinander gekoppelt, d.h. sie können aneinander Daten senden und voneinander Daten empfangen. Beispielsweise sind die mindestens eine Client-Vorrichtung 802 und die Server-Vorrichtung 804 kabellos über das Internet kommunikativ miteinander gekoppelt, wie in Fig. 8 anhand von Linien 806 symbolisch gezeigt.

In dem Beispiel der Fig. 8 umfasst das System 800 mehrere Client-Vorrichtungen 802, die mit einer Server-Vorrichtung 804 gekoppelt sind. Mindestens eine der Client-Vorrichtungen 802 kann die vorstehend diskutierte Computereinrichtung oder eines ihrer Ausführungsbeispiele umfassen und/oder das vorstehend diskutierte Verfahren oder eines seiner Ausführungsbeispiele ausführen. Zusätzlich oder alternativ kann die Server-Vorrichtung 804 die vorstehend diskutierte Computereinrichtung oder eines ihrer Ausführungsbeispiele umfassen und/oder das vorstehend diskutierte Verfahren oder eines seiner Ausführungsbeispiele ausführen.

Mindestens eine der Client-Vorrichtungen 802 kann als eine mobile Computereinrichtung in einer Zugmaschine des Transportes, beispielsweise in der Sattelzugmaschine 204 in Fig. 2, bereitgestellt sein. Die Server-Vorrichtung 804 kann bei dem Transportdienstleister und/oder einer den Transport überwachenden Behörde bereitgestellt sein.

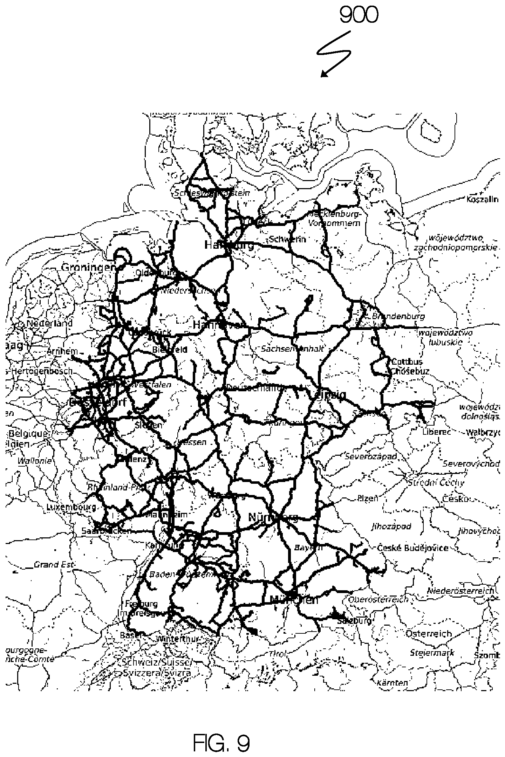

Fig. 9 zeigt ein Beispiel einer grafischen Darstellung 900, die aus dem vorstehend beschriebenen Verfahren oder einem seiner Ausführungsbeispiele resultiert. Alternativ oder zusätzlich kann die grafische Darstellung 900 in Fig. 9 von der vorstehend beschriebenen Computereinrichtung dargestellt werden. Die Darstellung 900 zeigt eine Abbildung über einen vorbestimmten Zeitraum durchgeführten Transporten innerhalb der Bundesrepublik Deutschland. Die schmalen Linien können beispielsweise die Kraftfahrstraßen darstellen, während die dicken Linien die von den Transporten gefahrenen Strecken veranschaulichen. Die Dicke der Linien und/oder die Farbe der Linien können je nach Anzahl der Transporte, die die entsprechenden Strecken in dem einstellbaren Zeitraum passierten, variiert werden, um die Übersicht zu verbessern.

In einem Beispiel kann ein Benutzer Eingaben vornehmen, um ein anderes Gebiet anzuzeigen, die Darstellungsweise (z.B. die Farbe oder Dicke der Linien) zu ändern, den eingestellten Zeitraum zu verändern, etc. Insbesondere kann der Benutzer Eingaben vornehmen, um einen Streckenabschnitt auszuzeichnen, der von besonderem Interesse ist. Der auszuzeichnende Streckenabschnitt kann ein Brückenbauwerk z.B. einer Autobahn oder über einer Autobahn sein. Hierzu kann der Benutzer beispielsweise das gewünschte Gebiet vergrößern, bis der auszuzeichnende Streckenabschnitt visuell erkennbar ist. Anschließend kann der Benutzer den Streckenabschnitt auszeichnen, indem er ihn beispielsweise anklickt oder dessen Bezeichnung eingibt. Hierzu kann der Benutzer mit einer I/O-Einheit einer Computereinrichtung interagieren. Als Ergebnis kann die Belastung des ausgezeichneten Streckenabschnitts durch die Transporte über den eingestellten Zeitraum angezeigt werden.

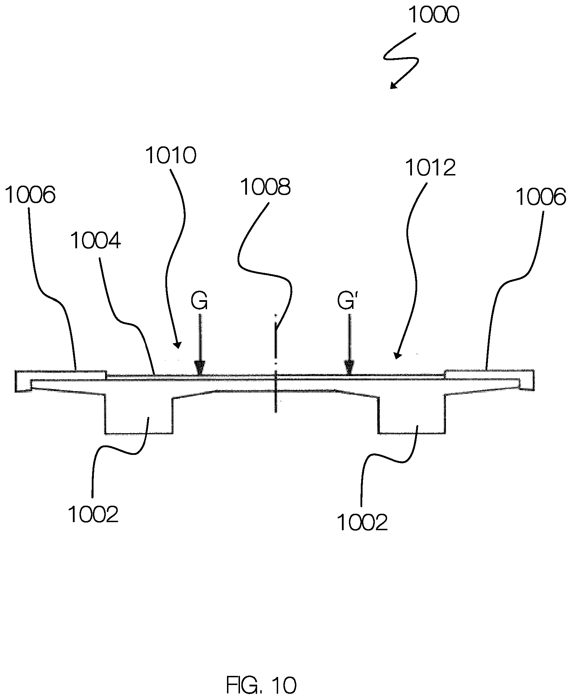

Fig. 10 zeigt schematisch ein Beispiel eines Querschnitts eines Brückenbauwerks 1000 zur Veranschaulichung eines Beispielmodells für die Belastung des Brückenbauwerks 1000. Das Brückenbauwerk 1000 umfasst zwei Stützen 1002, ein Fahrbahnoberbau 1004 und Ränder 1006. Der Straßenverkehr sowie der Transport können den Fahrbahnoberbau 1004 befahren, der durch eine Mittellinie 1008 in zwei Spuren 1010, 1012 geteilt wird.

Für die Modellrechnung wird angenommen, dass der Transport, in Fig. 10 durch sein Gesamtgewicht G symbolisiert, auf der linken Spur 1010 passiert. Gleichzeitig wird angenommen, dass die rechte Spur 1012 für den sonstigen Verkehr freigegeben ist. Es existieren mehrere Rechnungsmodelle für die Berechnung maximal zulässigen Belastung für das Brückenbauwerk. Nach einem Beispiel wird angenommen, dass durch den Transport die linke Hauptspur 1010 zu 100% belastet wird (G), während die rechte Nebenspur 1012 zu 65% belastet wird (G'). Nach einem anderen Berechnungsmodell kann die rechte Nebenspur 1012 zu 50% belastet angenommen werden.

Die so bestimmte Belastung des Brückenbauwerks kann in der oben beschriebenen Weise angezeigt werden. Zudem kann die so bestimmte Belastung des Brückenbauwerks an eine separate Computereinrichtung übermittelt werden, beispielsweise von einer mobilen Computereinrichtung in dem Transportfahrzeug oder in der Zugmaschine an eine Server-Vorrichtung der Behörde.

Obwohl die Rechnungsmodelle mit Bezug auf Fig. 10 anhand eines Beispiels eines Brückenbauwerks beschrieben sind, gelten sie entsprechend auch für andere Streckenabschnitte, beispielsweise Tunnelbauwerke, Stege und andere Art von Überführungen sowie für die Bestimmung der Belastung allgemein für den Straßenoberbau.

Die Beispiele, die hierin beschrieben sind, sind lediglich mögliche und gegebenenfalls vorteilhafte Ausführungsbeispiele der Erfindung zu deren Veranschaulichung und schränken den beanspruchten Gegenstand nicht ein.

Mit dem hierin beschriebenen Gegenstand, der insbesondere ein computerimplementiertes Verfahren, ein Navigationssystem und ein verteiltes Computersystem umfasst, können die Planung und Durchführung eines Transportes vereinfacht, verbessert und/oder beschleunigt werden. Durch die Steigerung der Effizienz können beispielsweise Kosten sowie der Bedarf an Ressourcen für den Transport gesenkt werden. Ferner kann die Sicherheit während des Transportes, sowohl für den Transportteilnehmer als auch für Dritte, gewährleistet oder erhöht werden. Ferner kann der Genehmigungsprozess eines Transportes zumindest teilweise automatisch durchgeführt oder maschinell unterstützt werden.

## Patentansprüche

1. Computerimplementiertes Verfahren, umfassend:
Bereitstellen (102) einer Karte (300);
Bestimmen (104) eines Startpunkts (302) und eines Zielpunkts (304) in der Karte (300);
Erfassen (106) von Transportdaten (L, B, H, G1, G2, G, A1, A2; W202, D1-D5, C1, C2; 1404, 1406), wobei die Transportdaten (L, B, H, G1, G2, G, A1, A2; W202, D1-D5, C1, C2; 1404, 1406) mindestens die Folgenden umfassen:
- Abmessungen eines Transportfahrzeugs samt Transportgut (L, B, H); und
- ein Gesamtgewicht (G);
Ermitteln (108) von mindestens einer ersten Route (306, 308) von dem Startpunkt (302) zu dem Zielpunkt (304) in der Karte (300);
Erfassen (110) von dreidimensionalen Hindernisdaten (408, 410; 506; 1110) auf der mindestens einen ersten Route (306, 308);
Überprüfen der dreidimensionalen Hindernisdaten (408, 410; 506; 1110) auf Vereinbarkeit mit den Transportdaten (L, B, H, G1, G2, G, A1, A2; W202, D1-D5, C1, C2; 1404, 1406), wobei das Überprüfen mindestens eines aus dem Folgenden ergibt:
- Durchfahrt ohne Anweisungen;
- Durchfahrt unmöglich; und
- Durchfahrt mit Anweisungen;
Ausschluss derjenigen mindestens einer ersten Route, für die das Überprüfen ergibt, dass die Durchfahrt unmöglich ist;
Erstellen (112) einer zweiten Route (510) basierend auf einer Auswahl der verbleibenden mindestens einen ersten Route (306, 308), oder einer Kombination der verbleibenden mindestens einen ersten Route (306, 308), den Transportdaten (L, B, H, G1, G2, G, A1, A2; W202, D1-D5, C1, C2; 1404, 1406) und den dreidimensionalen Hindernisdaten (408, 410; 506; 1110);
Bestimmen von Hindernispositionen zugehörig zu den dreidimensionalen Hindernisdaten (408, 410; 506; 1110);
Speichern der Hindernispositionen in einer Speichervorrichtung;
Erfassen einer Position eines Transportfahrzeugs (200) auf der zweiten Route zwischen dem Startpunkt und dem Zielpunkt, wobei das Transportfahrzeug (200) die Transportdaten (L, B, H, G1, G2, G, A1, A2; W202, D1-D5, C1, C2; 1404, 1406) aufweist;
Ermitteln einer nächsten Hindernisposition aus den Hindernispositionen, welche am nächsten zu der Position des Transportfahrzeugs (200) ist; und
falls das Überprüfen für die dreidimensionalen Hindernisdaten (408, 410; 506; 1110), welchen die nächste Hindernisposition zugehörig ist, Durchfahrt mit Anweisungen umfasst, Bereitstellen eines Hinweises auf Anweisungen zur Durchfahrt der dreidimensionalen Hindernisdaten (408, 410; 506; 1110), welchen die nächste Hindernisposition zugehörig ist.

2. Computerimplementiertes Verfahren nach Anspruch 1, ferner umfassend:
Erfassen der dreidimensionalen Hindernisdaten (408, 410; 506; 1110) mithilfe einer mobilen Erfassungseinheit, die eine dreidimensionale Abbildung (1200) von Umgebungen der mindestens einen ersten Route (306, 308) erstellt.

3. Computerimplementiertes Verfahren nach einem der vorhergehenden Ansprüche, ferner umfassend:
Erfassen der dreidimensionalen Hindernisdaten (408, 410; 506; 1110) mittels Abstandsmessung entlang der mindestens einen ersten Route (306, 308),
wobei die Abstandsmessung mindestens eines der Folgenden umfasst:
- optische Abstandsmessung;
- elektromagnetische Abstandsmessung; und
- akustische Abstandsmessung.

4. Computerimplementiertes Verfahren nach einem der vorhergehenden Ansprüche, wobei
die Transportdaten (L, B, H, G1, G2, G, A1, A2; W202, D1-D5, C1, C2; 1404, 1406) von Spezifikationen des Transportfahrzeugs (200) samt Transportgut (202) abhängen, die die Breite (B), die Höhe (H), die Länge, die Achslast (A1, A2) und/oder das Gewicht (G) betreffen.

5. Computerimplementiertes Verfahren nach einem der vorhergehenden Ansprüche, wobei
die dreidimensionalen Hindernisdaten (408, 410; 506; 1110) mindestens eines der Folgenden umfassen:
- eine maximale Durchfahrtshöhe (408);
- eine maximal zulässige Breite;
- einen Wendekreis;
- eine maximal zulässige Achslast; und
- ein maximal zulässiges Gewicht.

6. Computerimplementiertes Verfahren nach einem der vorhergehenden Ansprüche, ferner umfassend:
Erfassen (704) einer durch den Transport zurückgelegten Strecke;
Auszeichnen (706) eines Streckenabschnittes (1000) der durch den Transport zurückgelegten Strecke; und
Bestimmen (708) einer Belastung des ausgezeichneten Streckenabschnittes (1000) durch den Transport aufgrund der Transportdaten (L, B, H, G1, G2, G, A1, A2; W202, D1-D5, C1, C2; 1404, 1406),
wobei die Transportdaten (L, B, H, G1, G2, G, A1, A2; W202, D1-D5, C1, C2; 1404, 1406) das Gesamtgewicht (G) und/oder die Achslast (A1, A2) des Transports umfassen.

7. Computerimplementiertes Verfahren nach Anspruch 6, ferner umfassend:
statistisches Erfassen mindestens eines der Folgenden über einen vorbestimmten Zeitraum:
- eine Nutzlast auf dem ausgezeichneten Streckenabschnitt (1000);
- eine Einwirkung auf den ausgezeichneten Streckenabschnitt (1000); und
- eine Achslastüberrollung über dem ausgezeichneten Streckenabschnitt (1000).

8. Computerimplementiertes Verfahren nach einem der vorhergehenden Ansprüche, ferner umfassend:
Bereitstellen einer dreidimensionalen Abbildung (1200) von Umgebungen der mindestens einen ersten Route (306, 308);
Erfassen der dreidimensionalen Hindernisdaten (408, 410; 506; 1110) auf der mindestens einen ersten Route (306, 308) basierend auf der dreidimensionalen Abbildung (1200) von Umgebungen der mindestens einen ersten Route (306, 308); und
Bestimmen einer Schleppkurve (1402) des Transportes in einem gekrümmten Streckenabschnitt (1104) der mindestens einen ersten Route (306, 308) basierend auf den dreidimensionalen Hindernisdaten (408, 410; 506; 1110) und den Transportdaten (L, B, H, G1, G2, G, A1, A2; W202, D1-D5, C1, C2; 1404, 1406).

9. Navigationssystem, eingerichtet zum Ausführen des computerimplementierten Verfahrens nach einem der vorhergehenden Ansprüche.

10. Computereinrichtung, die ein Navigationssystem nach Anspruch 9 umfasst.

11. Verteiltes Computersystem (800) zur Navigation, umfassend:
ein Clientsystem (802) und ein Serversystem (804) kommunikativ miteinander gekoppelt,
wobei das Clientsystem (802) und/oder das Serversystem (804) zum Ausführen eines des computerimplementierten Verfahrens nach einem der Ansprüche 1 bis 8 eingerichtet ist, und
wobei das Clientsystem (802) und/oder das Serversystem (804) eine Speichervorrichtung zum Speichern und Bereitstellen mindestens eines der Folgenden umfasst:
- die Karte (300);
- die Transportdaten (L, B, H, G1, G2, G, A1, A2; W202, D1-D5, C1, C2; 1404, 1406);
- die dreidimensionalen Hindernisdaten (408, 410; 506; 1110);
- die mindestens eine ersten Route (306, 308); und
- die zweite Route (510).

12. Verfahren zum Durchführen eines Transportes,
wobei der Transport die Transportdaten (L, B, H, G1, G2, G, A1, A2; W202, D1-D5, C1, C2; 1404, 1406) nach einem der Ansprüche 1 bis 8 aufweist,
wobei der Transport entlang der zweiten Route (510) nach Anspruch 1 geplant und durchgeführt wird.

## Claims

1. A computer-implemented method, comprising:
providing (102) a map (300);
determining (104) a start point (302) and a destination point (304) in the map (300);
acquiring (106) transport data (L, B, H, G1, G2, G, A1, A2; W202, D1-D5, C1, C2; 1404, 1406), wherein the transport data (L, B, H, G1, G2, G, A1, A2; W202, D1-D5, C1, C2; 1404, 1406) comprises at least the following:
- dimensions (L, B, H) of a transport vehicle including goods to be transported; and
- a total weight (G);
calculating (108) at least one first route (306, 308) from the starting point (302) to the destination point (304) in the map (300);
acquiring (110) three-dimensional obstacle data (408, 410; 506; 1110) on the at least one first route (306, 308);
checking the three-dimensional obstacle data (408, 410; 506; 1110) for compatibility with the transport data (L, B, H, G1, G2, G, A1, A2; W202, D1-D5, C1, C2; 1404, 1406), wherein the checking outputs at least one of the following:
- passage without instructions;
- passage impossible; and
- passage with instructions;
excluding those from the at least one first route for which the checking outputs that the passage is impossible;
creating (112) a second route (510) based on a selection of the remaining ones from the at least one first route (306, 308), or a combination of the remaining ones from the at least one first route (306, 308), the transport data (L, B, H, G1, G2, G, A1, A2; W202, D1-D5, C1, C2; 1404, 1406) and the three-dimensional obstacle data (408, 410; 506; 1110);
determining obstacle positions associated with the three-dimensional obstacle data (408,410; 506; 1110);
storing the obstacle positions in a storage device;
acquiring a position of a transport vehicle (200) on the second route between the starting point and the destination point, the transport vehicle (200) having the transport data (L, B, H, G1, G2, G, A1, A2; W202, D1-D5, C1, C2; 1404, 1406);
calculating a next obstacle position from the obstacle positions that is closest to the position of the transport vehicle (200); and
if the checking for the three-dimensional obstacle data (408, 410; 506; 1110) with which the next obstacle position is associated comprises passage with instructions, providing an indication of instructions for passing the three-dimensional obstacle data (408, 410; 506; 1110) with which the next obstacle position is associated.

2. The computer-implemented method of claim 1, further comprising:
acquiring the three-dimensional obstacle data (408, 410; 506; 1110) using a mobile acquisition unit that creates a three-dimensional map (1200) of surroundings of the at least one first route (306, 308).

3. The computer-implemented method of any of the preceding claims, further comprising:
acquiring the three-dimensional obstacle data (408, 410; 506; 1110) using distance measurement along the at least one first route (306, 308),
wherein the distance measurement comprises at least one of the following:
- optical distance measurement;
- electromagnetic distance measurement; and
- acoustic distance measurement.

4. The computer-implemented method of any of the preceding claims, wherein
the transport data (L, B, H, G1, G2, G, A1, A2; W202, D1-D5, C1, C2; 1404, 1406) depend on specifications of the transport vehicle (200) including goods to be transported (202) that relate to the width (B), the height (H), the length, the axle load (A1, A2) and/or the weight (G).

5. The computer-implemented method of any of the preceding claims, wherein
the three-dimensional obstacle data (408, 410; 506; 1110) comprises at least one of the following:
- a maximum passage height (408);
- a maximum permissible width;
- a turning circle;
- a maximum permissible axle load; and
- a maximum permissible weight.

6. The computer-implemented method of any of the preceding claims, further comprising:
acquiring (704) a segment travelled by the transport;
marking (706) a segment section (1000) of the segment travelled by the transport; and
determining (708) a stress exerted by the transport on the marked segment section (1000) based on the transport data (L, B, H, G1, G2, G, A1, A2; W202, D1-D5, C1, C2; 1404, 1406),
wherein the transport data (L, B, H, G1, G2, G, A1, A2; W202, D1-D5, C1, C2; 1404, 1406) comprises the total weight (G) and/or the axle load (A1, A2) of the transport.

7. The computer-implemented method of claim 6, further comprising:
statistically acquiring at least one of the following over a predetermined period of time:
- a payload on the marked segment section (1000);
- an impact on the marked segment section (1000); and
- an axle load rollover over the marked segment section (1000).

8. The computer-implemented method of any of the preceding claims, further comprising:
providing a three-dimensional mapping (1200) of surroundings of the at least one first route (306, 308);
acquiring the three-dimensional obstacle data (408, 410; 506; 1110) on the at least one first route (306, 308) based on the three-dimensional mapping (1200) of surroundings of the at least one first route (306, 308); and
determining a drag curve (1402) of the transport in a curved segment section (1104) of the at least one first route (306, 308) based on the three-dimensional obstacle data (408, 410; 506; 1110) and the transport data (L, B, H, G1, G2, G, A1, A2; W202, D1-D5, C1, C2; 1404, 1406).

9. A navigation system configured to carry out the computer-implemented method of any of the preceding claims.

10. A computing device comprising a navigation system according to claim 9.

11. A distributed computer system (800) for navigation, comprising:
a client system (802) and a server system (804) communicatively coupled to each other,
wherein the client system (802) and/or the server system (804) is configured to carry out any of the computer-implemented method of any of claims 1 to 8, and
wherein the client system (802) and/or the server system (804) comprises a storage device for storing and providing at least one of the following:
- the map (300);
- the transport data (L, B, H, G1, G2, G, A1, A2; W202, D1-D5, C1, C2; 1404, 1406);
- the three-dimensional obstacle data (408, 410; 506; 1110);
- the at least one first route (306, 308); and
- the second route (510).

12. A method for carrying out a transport,
wherein the transport has the transport data (L, B, H, G1, G2, G, A1, A2; W202, D1-D5, C1, C2; 1404, 1406) of any of claims 1 to 8,
wherein the transport is planned and carried out along the second route (510) of claim 1.

## Revendications

1. Procédé implémenté par ordinateur comprenant :
la mise à disposition (102) d'une carte (300) ;
la détermination (104) d'un point de départ (302) et d'un point de destination (304) sur la carte (300) ;
la saisie (106) de données de transport (L, B, H, G1, G2, G, A1, A2 ; W202, D1-D5, C1, C2 ; 1404, 1406), dans lequel les données de transport (L, B, H, G1, G2, G, A1, A2 ; W202, D1-D5, C1, C2 ; 1404, 1406) comprenant les éléments suivants :
- dimensions d'un véhicule de transport avec la marchandise à transporter (L, B, H) ; et
- un poids total (G) ;
la détermination (108) d'au moins un premier itinéraire (306, 308) du point de départ (302) au point de destination (304) sur la carte (300) ;
la saisie (110) de données d'obstacles tridimensionnelles (408, 410 ; 506 ; 1110) sur l'au moins un premier itinéraire (306, 308) ;
la vérification des données d'obstacles tridimensionnelles (408, 410 ; 506 ; 1110) afin de déterminer la compatibilité avec les données de transport (L, B, H, G1, G2, G, A1, A2 ; W202, D1-D5, C1, C2 ; 1404, 1406), dans lequel la vérification donne au moins un des éléments suivants :
- traversée sans instructions ;
- traversée impossible ; et
- traversée avec instructions ;
l'exclusion des éléments de l'au moins un premier itinéraire pour lesquels la vérification indique que la traversée est impossible ;
la création (112) d'un deuxième itinéraire (510) sur la base d'une sélection de l'au moins un premier itinéraire (306, 308) restant ou d'une combinaison de l'au moins un premier itinéraire (306, 308) restant, des données de transport (L, B, H, G1, G2, G, A1, A2 ; W202, D1-D5, C1, C2 ; 1404, 1406) et des données d'obstacles tridimensionnelles (408, 410 ; 506 ; 1110) ;
la détermination de positions d'obstacles appartenant aux données d'obstacles tridimensionnelles (408, 410 ; 506 ; 1110) ;
l'enregistrement des positions d'obstacles dans un dispositif d'enregistrement ;
la saisie d'une position d'un véhicule de transport (200) sur le deuxième itinéraire entre le point de départ et le point de destination, dans lequel le véhicule de transport (200) comprend les données de transport (L, B, H, G1, G2, G, A1, A2 ; W202, D1-D5, C1, C2 ; 1404, 1406) ;
la détermination d'une position d'obstacle suivante à partir des positions d'obstacles, qui est la plus proche de la position du véhicule de transport (200) ; et
si la vérification pour les données d'obstacles tridimensionnelles (408, 410 ; 506 ; 1110) auxquelles appartient la position d'obstacle suivante implique une traversée avec instructions, la mise à disposition d'une référence à des instructions concernant la traversée des données d'obstacles tridimensionnelles (408, 410 ; 506 ; 1110) auxquelles appartient la position d'obstacle suivante.

2. Procédé implémenté par ordinateur selon la revendication 1, comprenant en outre :
la saisie des données d'obstacles tridimensionnelles (408, 410 ; 506 ; 1110) à l'aide d'une unité de saisie mobile qui crée une représentation tridimensionnelle (1200) d'environnements de l'au moins un premier itinéraire (306, 308).

3. Procédé implémenté par ordinateur selon l'une des revendications précédentes, comprenant en outre :
la saisie des données d'obstacles tridimensionnelles (408, 410 ; 506 ; 1110) au moyen d'une mesure de distance le long de l'au moins un premier itinéraire (306, 308),
dans lequel la mesure de distance d'au moins un des éléments suivants comprend :
- mesure de distance optique ;
- mesure de distance électromagnétique ; et
- mesure de distance acoustique.

4. Procédé implémenté par ordinateur selon l'une des revendications précédentes, dans lequel :
les données de transport (L, B, H, G1, G2, G, A1, A2 ; W202, D1-D5, C1, C2 ; 1404, 1406) dépendent des spécifications du véhicule de transport (200) avec la marchandise à transporter (202), qui concernent la largeur (B), la hauteur (H), la longueur, la charge sur les essieux (A1, A2) et/ou le poids total (G).

5. Procédé implémenté par ordinateur selon l'une des revendications précédentes, dans lequel :
les données d'obstacles tridimensionnelles (408, 410 ; 506 ; 1110) comprennent au moins un des éléments suivants :
- une hauteur de traversée maximale (408) ;
- une largeur maximale admissible ;
- un rayon de braquage ;
- une charge par essieu maximale admissible ; et
- un poids maximal admissible.

6. Procédé implémenté par ordinateur selon l'une des revendications précédentes, comprenant en outre :
la saisie (704) d'un trajet parcouru par le transport ;
la caractérisation (706) d'une portion de trajet (1000) du trajet parcouru par le transport ; et
la détermination (708) d'une charge de la portion de trajet **caractérisée** (1000) par le transport sur la base des données de transport (L, B, H, G1, G2, G, A1, A2 ; W202, D1-D5, C1, C2 ; 1404, 1406),
dans lequel les données de transport (L, B, H, G1, G2, G, A1, A2 ; W202, D1-D5, C1, C2 ; 1404, 1406) comprennent le poids total (G) et/ou la charge par essieu (A1, A2) du transport.

7. Procédé implémenté par ordinateur selon la revendication 6, comprenant en outre :
la saisie statistique d'au moins un des éléments suivants sur une période prédéterminée :
- une charge utile sur la portion de trajet **caractérisée** (1000) ;
- un effet sur la portion de trajet **caractérisée** (1000) ; et
- un roulement de charge par essieu sur la portion de trajet **caractérisée** (1000).

8. Procédé implémenté par ordinateur selon l'une des revendications précédentes, comprenant en outre :
la mise à disposition d'une représentation tridimensionnelle (1200) d'environnements de l'au moins un premier itinéraire (306, 308) ;
la saisie des données d'obstacles tridimensionnelles (408, 410 ; 506 ; 1110) sur l'au moins un premier itinéraire (306, 308) sur la base de la représentation tridimensionnelle (1200) d'environnements de l'au moins un premier itinéraire (306, 308) ; et
la détermination d'une épure de giration (1402) du transport dans une portion de trajet incurvée (1104) de l'au moins un premier itinéraire (306, 308) sur la base des données d'obstacles tridimensionnelles (408, 410 ; 506 ; 1110) et des données de transport (L, B, H, G1, G2, G, A1, A2 ; W202, D1-D5, C1, C2 ; 1404, 1406).

9. Système de navigation conçu pour l'exécution du procédé implémenté par ordinateur selon l'une des revendications précédentes.

10. Dispositif informatique qui comprend un système de navigation selon la revendication 9.

11. Système informatique distribué (800) pour la navigation, comprenant :
un système client (802) et un système serveur (804) couplés ensemble de manière communicante,
dans lequel le système client (802) et/ou le système serveur (804) est conçu pour l'exécution du procédé implémenté par ordinateur selon l'une des revendications 1 à 8 et
dans lequel le système client (802) et/ou le système serveur (804) comprend un dispositif d'enregistrement pour l'enregistrement et la mise à disposition d'au moins un des éléments suivants :
- la carte (300) ;
- les données de transport (L, B, H, G1, G2, G, A1, A2 ; W202, D1-D5, C1, C2 ; 1404, 1406) ;
- les données d'obstacles tridimensionnelles (408, 410 ; 506 ; 1110) ;
- l'au moins un premier itinéraire (306, 308) ; et
- le deuxième itinéraire (510).

12. Procédé pour l'exécution d'un transport,
dans lequel le transport présente les données de transport (L, B, H, G1, G2, G, A1, A2 ; W202, D1-D5, C1, C2 ; 1404, 1406) selon l'une des revendications 1 à 8,
dans lequel le transport est planifié et exécuté le long du deuxième itinéraire (510) selon la revendication 1.
